# EUROPEAN PATENT APPLICATION

(11) **EP 4 280 726 A1**
(43) Date of publication of application: **22.11.2023**
(21) Application number: 21919310.9
(22) Date of filing: 13.01.2021
(51) Int. Cl.: H04W 72/02, H04W 92/18

(54) **TERMINAL, AND TRANSMISSION METHOD**

(71) Applicant: NTT DOCOMO, INC., Tokyo 100-6150 (JP)
(72) Inventor: YOSHIOKA, Shohei, Tokyo 100-6150 (JP); NAGATA, Satoshi, Tokyo 100-6150 (JP)
(74) Representative: Hoffmann Eitle
(86) International application number: PCT/JP2021/000928
(87) International publication number: WO 2022/153416

(57) **Abstract**

A terminal including: a reception unit configured to receive assignment information of a resource of sidelink transmission from a base station of a first operator; a control unit configured to determine whether to perform sidelink transmission using the resource based on a sidelink signal received from a terminal of a second operator; and a transmission unit configured to perform sidelink transmission using the resource when it is determined to perform sidelink transmission using the resource.

## Description

### [FIELD OF THE INVENTION]

The present invention relates to a terminal and a base station in a wireless communication system.

### [BACKGROUND OF THE INVENTION]

In LTE (Long Term Evolution) and LTE successor systems (e.g., LTE-A (LTE Advanced), NR (New Radio) (also referred to as 5G)), a D2D technology in which terminals communicate directly with each other without using a base station has been introduced.

The D2D reduces traffic between the terminals and the base stations and enables communication between the terminals even when the base stations are unable to communicate during a disaster, etc. Note that, because the D2D is referred to as sidelink in 3GPP (3rd Generation Partnership Project), basically, the term "sidelink" is used herein.

The sidelink communication is broadly classified into: discovery for discovering other terminals capable of communication; and communication for direct communication between terminals (also referred to as D2D direct communication, direct communication between terminals, or the like). Hereinafter, when communication and discovery are not specifically distinguished, it is simply called sidelink. Various use cases of services related to V2X (Vehicle to Everything) in NR are being discussed.

### [Citation List]

### [Non-Patent Document]

[Non-Patent Document 1] 3GPP TS 38.331 V16.1.0 (2020-07)
[Non-Patent Document 2] 3GPP TS 38.214 V16.2.0 (2020-06)
[Non-Patent Document 3] 3GPP TS 38.321 V16.1.0 (2020-07)

### SUMMARY OF THE INVENTION

### [TECHNICAL PROBLEM]

Sidelink services are expected to be provided by multiple different operators (also referred to as carriers) in the same region.

In a mode in which resources for sidelink transmission are allocated from a base station to a terminal, an uncontrollable sidelink transmission from the viewpoint of an operator may occur in an environment in which there exists a plurality of operators as described above. Therefore, a collision of sidelink transmissions may occur between terminals of different operators.

The present invention has been made in view of the above, and it is an object of the present invention to provide a technology that makes it possible to avoid a collision of sidelink transmissions between terminals of different operators.

### [SOLUTION TO PROBLEM]

According to the disclosed technology, there is provide a terminal including:
a reception unit configured to receive assignment information of a resource of sidelink transmission from a base station of a first operator;
a control unit configured to determine whether to perform sidelink transmission using the resource based on a sidelink signal received from a terminal of a second operator; and
a transmission unit configured to perform sidelink transmission using the resource when it is determined to perform sidelink transmission using the resource.

### [ADVANTAGEOUS EFFECTS OF INVENTION]

According to the disclosed technology, a technique is provided that makes it possible to avoid a collision of sidelink transmissions between terminals of different operators.

### BRIEF DESCRIPTION OF THE DRAWINGS

[Fig. 1] Fig. 1 is a drawing illustrating V2X.
[Fig. 2] Fig. 2 is a drawing illustrating an example (1) of a V2X transmission mode.
[Fig. 3] Fig. 3 is a drawing illustrating an example (2) of a V2X transmission mode.
[Fig. 4] Fig. 4 is a drawing illustrating an example (3) of a V2X transmission mode.
[Fig. 5] Fig. 5 is a drawing illustrating an example (4) of a V2X transmission mode.
[Fig. 6] Fig. 6 is a drawing illustrating an example (5) of a V2X transmission mode.
[Fig. 7] Fig. 7 is a drawing illustrating an example (1) of a V2X communication type.
[Fig. 8] Fig. 8 is a drawing illustrating an example (2) of a V2X communication type.
[Fig. 9] Fig. 9 is a drawing illustrating an example (3) of a V2X communication type.
[Fig. 10] Fig. 10 is a sequence diagram illustrating an example (1) of V2X operation.
[Fig. 11] Fig. 11 is a sequence diagram illustrating an example (2) of V2X operation.
[Fig. 12] Fig. 12 is a sequence diagram illustrating an example (3) of V2X operation.
[Fig. 13] Fig. 13 is a sequence diagram illustrating an example (4) of V2X operation.
[Fig. 14] Fig. 14 is a drawing illustrating an example of a sensing operation.
[Fig. 15] Fig. 15 is a drawing illustrating an example of a partial sensing operation.
[Fig. 16] Fig. 16 is a flowchart illustrating an example of reevaluation.
[Fig. 17] Fig. 17 is a drawing illustrating an example of reevaluation.
[Fig. 18] Fig. 18 is a flowchart illustrating an example of preemption.
[Fig. 19] Fig. 19 is a drawing illustrating mode 1.
[Fig. 20] Fig. 20 is a drawing illustrating mode 1.
[Fig. 21] Fig. 21 is a drawing illustrating mode 1.
[Fig. 22] Fig. 22 is a drawing illustrating Example 1.
[Fig. 23] Fig. 23 is a drawing illustrating Example 1.
[Fig. 24] Fig. 24 is a drawing illustrating Example 1.
[Fig. 25] Fig. 25 is a drawing illustrating Example 2.
[Fig. 26] Fig. 26 is a drawing illustrating Example 4.
[Fig. 27] Fig. 27 is a drawing illustrating Example 4.
[Fig. 28] Fig. 28 is a drawing illustrating Example 4.
[Fig. 29] Fig. 29 is a drawing illustrating Example 4.
[Fig. 30] Fig. 30 is a drawing illustrating Example 5.
[Fig. 31] Fig. 31 is a drawing illustrating Example 5.
[Fig. 32] Fig. 32 is a drawing illustrating Example 5.
[Fig. 33] Fig. 33 is a drawing illustrating Example 5.
[Fig. 34] Fig. 34 is a drawing illustrating an example of a functional structure of a base station 10 in an embodiment of the present invention.
[Fig. 35] Fig. 35 is a drawing illustrating an example of a functional structure of a terminal 20 in an embodiment of the present invention.
[Fig. 36] Fig. 36 is a drawing illustrating an example of a hardware structure of the base station 10 or the terminal 20 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. Note that the conventional technologies are, for example, a conventional NR (for example, the conventional techniques that are disclosed in Non-Patent Documents 1 to 3) or a conventional LTE. However, the conventional technologies are not limited to the conventional NR or conventional LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

Furthermore, in an embodiment of the present invention, the duplex scheme may be TDD (Time Division Duplex) scheme, FDD (Frequency Division Duplex) scheme, or other schemes (e.g., Flexible Duplex, or the like).

The "resource" according to embodiments of the present invention may be a time resource, a frequency resource, or a time-frequency resource.

Further, in an embodiment of the present invention, the expression, a radio (wireless) parameter is "configured" may mean that a predetermined value is pre-configured, or may mean that a radio parameter indicated by the base station 10 or the terminal 20 is configured.

In the following description, operations of an upper layer (e.g., MAC layer) and a lower layer (e.g., PHY layer) in the terminal is described as an example. Note that the functional division between the upper layer and the lower layer is an example, and the operations described below may be performed without distinguishing between the upper layer and the lower layer.

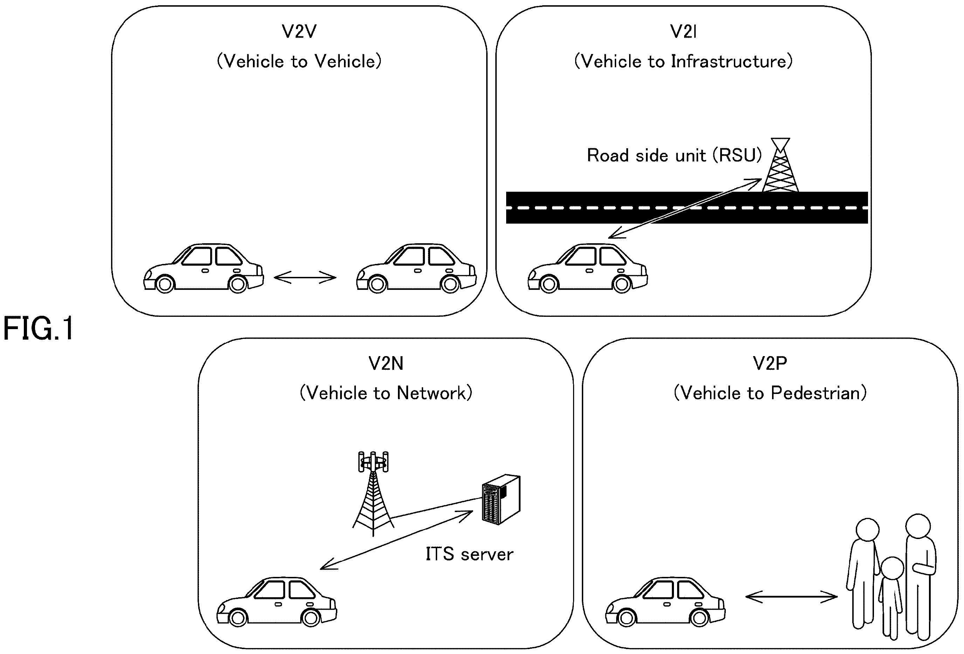

Fig. 1 is a drawing illustrating V2X. In 3GPP, enhancing D2D functions to realize V2X (Vehicle to Everything) or eV2X (enhanced V2X) has been discussed and specifications are being developed. As illustrated in Fig. 1, V2X is a part of ITS (Intelligent Transport Systems) and is a generic name (collective name) for: V2V (Vehicle to Vehicle) referring to a form of communication performed between vehicles; V2I (Vehicle to Infrastructure) referring to a form of communication performed between a vehicle and a road-side unit (RSU) that is installed on roadside; V2N (Vehicle to Network) referring to a form of communication performed between a vehicle and an ITS server; and V2P (Vehicle to Pedestrian) referring to a form of communication performed between a vehicle and a mobile terminal that is carried by a pedestrian.

Further, in 3GPP, V2X using LTE/NR's cellular communication and communication between terminals has been discussed. V2X using cellular communication may be referred to as cellular V2X. In NR V2X, discussions have been performed to realize higher system capacity, reduced latency, higher reliability, and QoS (Quality of Service) control.

With respect to LTE V2X or NR V2X, it is assumed that discussions may be not limited to 3GPP specifications in the future. For example, it is assumed to be discussed on: how to secure interoperability; how to reduce cost by implementing upper layers; how to use or how to switch multiple RATs (Radio Access Technologies); how to handle regulations of each country; how to obtain and distribute data of LTE V2X or NR V2X platform; and how to manage and use databases.

In an embodiment of the present invention, a form of embodiment is mainly assumed in which communication devices (also referred to as terminals) are mounted on vehicles. However, an embodiment of the present invention is not limited to such a form. For example, communication apparatuses may be terminals held by people, may be apparatuses mounted on drones or aircrafts, or may be base stations, RSUs, relay stations (relay nodes), terminal capable of scheduling, etc. Here, the vehicle on which the communication device is mounted may also be referred to as a terminal.

It should be noted that SL (Sidelink) may be distinguished from UL (Uplink) or DL (Downlink), based on one of, or a combination of the following 1) through 4). Furthermore, SL may be referred to as a different name.
1) Resource arrangement in the time domain
2) Resource arrangement in the frequency domain
3) Synchronization signal to be referred to (including SLSS (Sidelink Synchronization Signal))
4) Reference signal that is used for pass loss measurement used for transmission power control

Further, with respect to OFDM (Orthogonal Frequency Division Multiplexing) of SL or UL, any of CP-OFDM (Cyclic-Prefix OFDM), DFT-S-OFDM (Discrete Fourier Transform-Spread-OFDM), OFDM without Transform precoding, and OFDM with Transform precoding may be applied.

In LTE SL, with respect to allocating SL resources to terminal 20, Mode 3 and Mode 4 are defined. In Mode 3, transmission resources are dynamically allocated using a DCI (Downlink Control Information) that is transmitted from a base station 10 to a terminal 20. Further, in Mode 3, SPS (Semi Persistent Scheduling) is available. In Mode 4, the terminal 20 autonomously selects transmission resources from a resource pool.

In NR SL, with respect to allocating SL resources to the terminal 20, Mode 1 and Mode 2 are defined. In Mode 1, transmission resources are allocated by a DCI that is transmitted from the base station 10 to the terminal 20. In Mode 2, the terminal 20 autonomously selects transmission resources from a resource pool.

It should be noted that a slot in an embodiment of the present invention may be read on (replaced with) a symbol, a mini slot, a subframe, a radio frame, or a TTI (Transmission Time Interval). Further, a cell in an embodiment of the present invention may be read on a cell group, a carrier component, a BWP (bandwidth part), a resource pool, a resource, a RAT (Radio Access Technology), a system (including a wireless LAN), etc.

Note that, in an embodiment of the present invention, the terminal 20 is not limited to a V2X terminal, but may be any type of terminal that performs D2D communication. For example, the terminal 20 may be a terminal carried by a user, such as a smartphone, or an IoT (Internet of Things) device, such as a smart meter. Further, the terminal may also be referred to as "UE".

### (Basic configuration example and basic operation example of system)

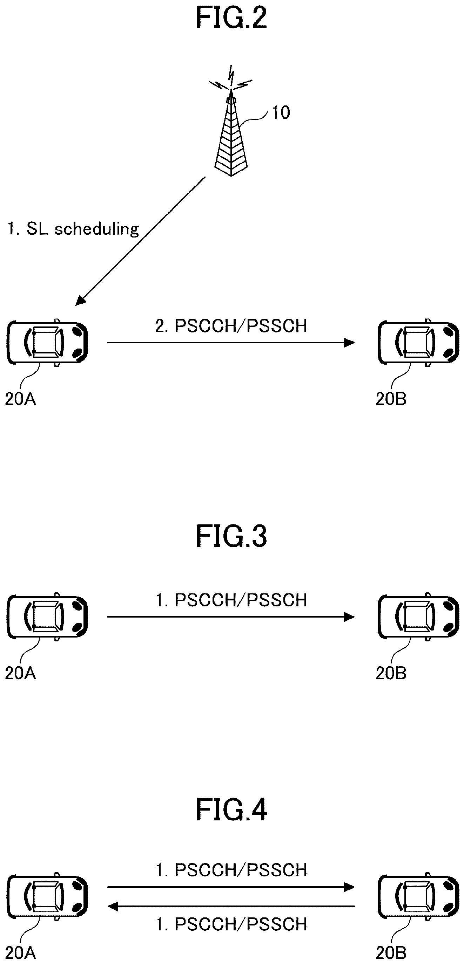

Figs. 2 to 13 used in the following description, illustrate an example of system configuration in an embodiment of the present invention, and also illustrate an example of a basic operation in a system related to an embodiment of the present invention.

As shown in Fig. 2, the wireless communication system related to an embodiment of the present invention includes a terminal 20A. a terminal 20B, and a base station 10. Note that there are many terminals in the real world, but Fig. 2 shows the terminal 20A and the terminal 20B as examples.

Hereinafter, in a case where the terminals 20A, 20B, or the like are not particularly distinguished, the term "terminal 20" or "UE" will be used. Fig. 2 illustrates, for example, a case where the terminal 20A and the terminal 20B are both within a coverage of a cell. However, the operation in an embodiment of the present invention embodiment can be applied to a case where the terminal 20 is outside the coverage.

Note that the terminal 20 need not be a single housing device. For example, even when various sensors are arranged and distributed in a vehicle, a device including the various sensors is may be a terminal 20.

Further, processing contents of sidelink transmission data of the terminal 20 are basically the same as those of UL transmission in LTE or NR. For example, the terminal 20 may scramble a codeword of the transmission data, may modulate to generate complex-valued symbols, may map the complex-valued symbols to one or two layers, and may perform precoding. Further, the precoded complex-valued symbols are mapped to a resource element to generate a transmission signal (e.g., complex-valued time-domain SC-FDMA signal) and, and the generated signal is transmitted from each antenna port.

Regarding the base station 10, the base station 10 has a function of cellular communication as a base station in LTE or NR and a function of enabling communication of the terminal 20 according to an embodiment of the present invention (e.g., resource pool configuration, resource allocation, etc.). Further, the base station 10 may also be an RSU (gNB-type RSU). The base station 10 is a communication apparatus that provides one or more cells and performs wireless communications with the terminal 20. Physical resources of the radio signal may be defined in the time domain and the frequency domain, the time domain may be defined by the number of OFDM symbols, and the frequency domain may be defined by the number of sub-carriers or resource blocks. Further, a TTI (Transmission Time Interval) in the time domain may be a slot, the TTI may be a subframe, or may be a symbol.

Further, in the wireless communication system according to an embodiment of the present invention, a signal waveform used by the terminal 20 for SL or UL may be OFDMA, SC-FDMA, or other signal waveforms.

In an example illustrated in Fig. 2, the transmission-side terminal 20A may be referred to as TX-UE, and the reception-side terminal 20B may be referred to as RX-UE.

Fig. 2 is a drawing illustrating an example (1) of a V2X transmission mode. In the transmission mode of sidelink communication illustrated in Fig. 2, in step 1, a base station 10 transmits sidelink scheduling information to a terminal 20A. Subsequently, based on the received scheduling information, the terminal 20A transmits control information via PSCCH (Physical Sidelink Control Channel) and transmits data (which may be control information) via PSSCH (Physical Sidelink Shared Channel) to the terminal 20B (step 2). Note that "transmitting control information via PSCCH" may be described as "transmitting PSCCH", and transmitting data (which may be control information) via PSSCH may be described as transmitting PSSCH.

The transmission mode of sidelink communication illustrated in Fig. 2 may be referred to as a sidelink transmission mode 3 in LTE. In the sidelink transmission mode 3 in LTE, Uu based sidelink scheduling is performed. Uu is a radio interface between UTRAN (Universal Terrestrial Radio Access Network) and UE (User equipment). Further, the transmission mode of sidelink communication illustrated in Fig. 2 may be referred to as a sidelink transmission mode 1 in NR.

Fig. 3 is a drawing illustrating an example (2) of a V2X transmission mode. In a transmission mode of sidelink communication illustrated in Fig. 3, in step 1, a terminal 20A transmits PSCCH and PSSCH to a terminal 20B using autonomously selected resources. The transmission mode of sidelink communication illustrated in Fig. 3 may be referred to as a sidelink transmission mode 4 in LTE. In the sidelink transmission mode 4 in LTE, the terminal 20A itself performs resource selection. The transmission mode of sidelink communication illustrated in Fig. 3 may be referred to as a sidelink transmission mode 2 in NR. In the sidelink transmission mode 2 in NR, the terminal 20A itself performs resource selection.

Fig. 4 is a drawing illustrating an example (3) of a V2X transmission mode. In a transmission mode of sidelink communication illustrated in Fig. 4, in step 1, a terminal 20A transmits PSCCH and PSSCH to a terminal 20B using autonomously selected resources. Similarly, the terminal 20B transmits PSCCH and PSSCH to the terminal 20A using autonomously selected resources (step 1) The transmission mode of sidelink communication illustrated in Fig. 4 may be referred to as a sidelink transmission mode 2 or transmission mode 2a in NR. In the sidelink transmission mode 2 in NR, the terminal 20 itself performs resource selection.

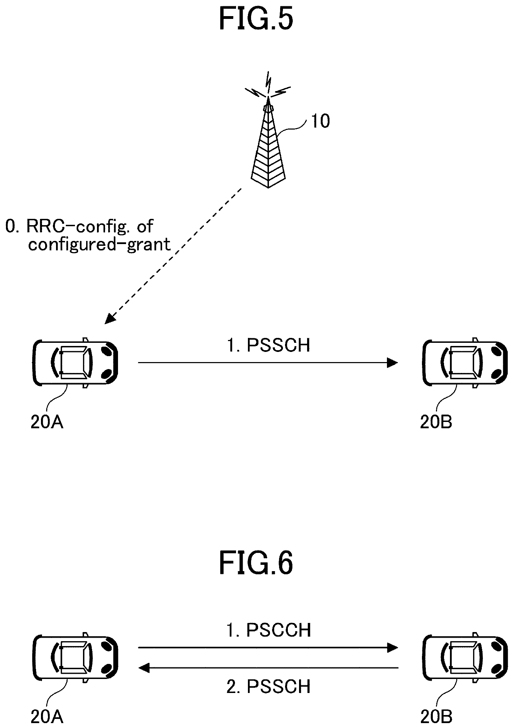

Fig. 5 is a drawing illustrating an example (4) of a V2X transmission mode. In the transmission mode of sidelink communication illustrated in Fig. 5, in step 0, the base station 10 transmits a sidelink resource pattern to the terminal 20A via RRC (Radio Resource Control) configuration. Alternatively, the sidelink resource pattern may be pre-configured to the terminal 20A. Subsequently, the terminal 20A transmits PSSCH to the terminal 20B, based on the received or pre-configured resource pattern (step 1). The transmission mode of sidelink communication illustrated in Fig. 5 may be referred to as a sidelink transmission mode 2c in NR.

Fig. 6 is a drawing illustrating an example (5) of a V2X transmission mode. In the transmission mode of sidelink communication illustrated in Fig. 6, in step 1, the terminal 20A transmits sidelink scheduling information to the terminal 20B via PSCCH. Subsequently, the terminal 20B transmits PSSCH to the terminal 20A, based on the received scheduling information (step 2). The transmission mode of sidelink communication illustrated in Fig. 6 may be referred to as a sidelink transmission mode 2d in NR.

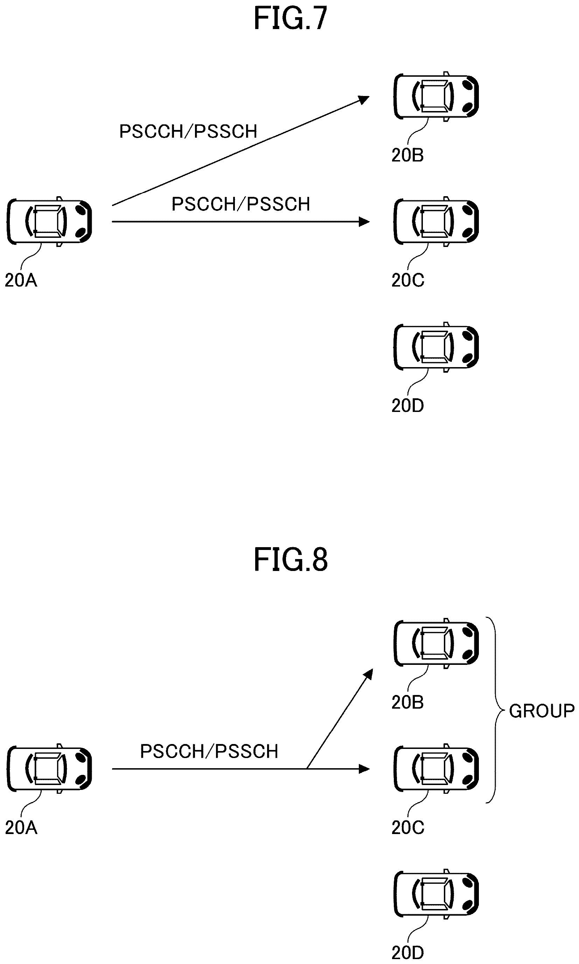

Fig. 7 is a drawing illustrating an example (1) of a V2X communication type. The sidelink communication type illustrated in Fig. 7 is uni-cast. The terminal 20A transmits PSCCH and PSSCH to terminal 20. In an example illustrated in Fig. 7, the terminal 20A performs uni-cast to the terminal 20B, and performs uni-cast to the terminal 20C.

Fig. 8 is a drawing illustrating an example (2) of a V2X communication type. The sidelink communication type illustrated in Fig. 8 is group-cast. The terminal 20A transmits PSCCH and PSSCH to a group to which one or more terminals 20 belong. In an example illustrated in Fig. 8, the group includes a terminal 20B and a terminal 20C, and the terminal 20A performs groupcast to the group.

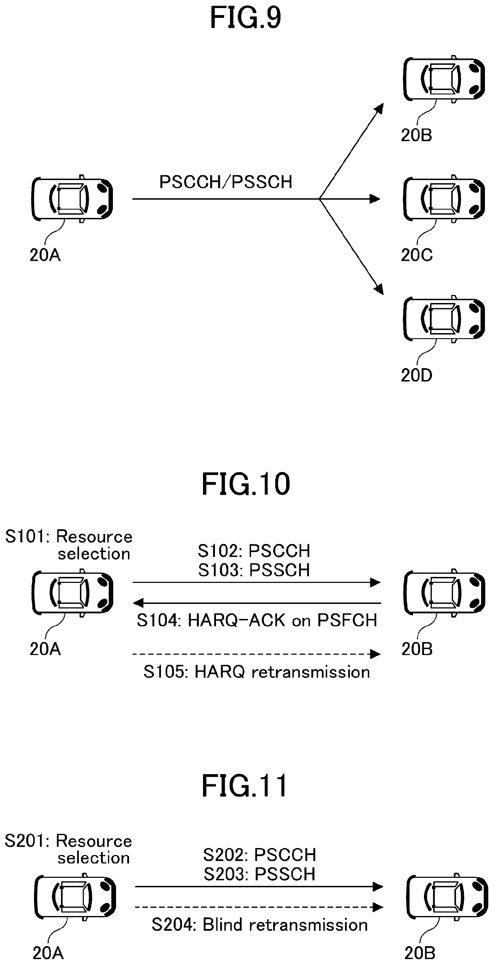

Fig. 9 is a drawing illustrating an example (3) of a V2X communication type. The sidelink communication type illustrated in Fig. 9 is broad-cast. The terminal 20A transmits PSCCH and PSSCH to one or more terminals 20. In an example illustrated in Fig. 9, the terminal 20A performs broadcast to the terminal 20B, the terminal 20C, and the terminal 20D. Note that the terminal 20A shown in Figs. 7 to 9 may be referred to as a header UE (header-UE).

In addition, in NR-V2X, HARQ (Hybrid automatic repeat request) is supported for unicast and groupcast of sidelink. In addition, in NR-V2X, SFCI (Sidelink Feedback Control Information) containing a HARQ response is defined. SFCI is transmitted via PSFCH (Physical Sidelink Feedback Channel).

Note that, in the following description, it is assumed that PSFCH is used in the transmission of HARQ-ACK on sidelink. However, this just an example. For example, PSCCH may be used to transmit HARQ-ACK on sidelink, PSSCH may be used to transmit HARQ-ACK on sidelink, or other channels may be used to transmit HARQ-ACK on sidelink.

Hereinafter, for the sake of convenience, the overall information reported by the terminal 20 in the HARQ is referred to as HARQ-ACK. This HARQ-ACK may also be referred to as HARQ-ACK information. Further, more specifically, a codebook applied to the HARQ-ACK information reported from the terminal 20 to the base station 10 or the like is called a HARQ-ACK codebook. The HARQ-ACK codebook defines a bit string (sequence) of the HARQ-ACK information. Note that "HARQ-ACK" sends not only ACK but also NACK.

Fig. 10 is a sequence diagram illustrating an example (1) of V2X HARQ-ACK related operation.

In step S101, the terminal 20A autonomously selects a resource to be used for PSCCH and PSSCH from a resource selection window having a predetermined period. The resource selection window may be configured to the terminal 20 by the base station 10. Note that, in the resource selection, a resource identifying process for determining a set of candidates, and a resource selecting process for selecting a resource from the set are performed.

In step S102 and step S103, the terminal 20A transmits, using the resource autonomously selected in step S101, SCI (Sidelink Control Information) via PSCCH (or PSSCH) and transmits SL data via PSSCH. For example, the terminal 20A may transmit the PSCCH using a frequency resource adjacent to the PSSCH frequency resource with the same time resource as at least a portion of the time resource of the PSSCH.

The terminal 20B receives the SCI (PSCCH or PSSCH) and the SL data (PSSCH) transmitted from the terminal 20A. The received SCI may include information of a PSFCH resource for the terminal 20B to send HARQ-ACK for reception of the data. The terminal 20A may include information of the autonomously selected information (resource reservation information) in the SCI, and then perform the transmission.

In step S104, the terminal 20B transmits a HARQ-ACK for the received data to the terminal 20A using the PSFCH resource specified by the received SCI.

In step S105, when the HARQ-ACK received in step S104 indicates a request for retransmission, that is, when the HARQ-ACK is a NACK (negative response), the terminal 20A retransmits the PSCCH and the PSSCH to the terminal 20B. The terminal 20A may retransmit the PSCCH and the PSSCH using an autonomously selected resource.

Note that in a case where HARQ feedback control is not performed, step S104 and step S105 need not be performed.

Fig. 11 is a sequence diagram illustrating an example (2) of V2X HARQ-ACK related operation. A blind retransmission without HARQ feedback control for improving the transmission success rate or reachable distance, may be performed.

In step S201, the terminal 20A autonomously selects a resource to be used for PSCCH and PSSCH from a resource selection window having a predetermined period. The resource selection window may be configured to the terminal 20 by the base station 10.

In step S202 and step S203, the terminal 20A transmits, using the resource autonomously selected in step S201, SCI via PSCCH (or PSSCH), and transmits SL data via PSSCH. For example, the terminal 20A may transmit the PSCCH using a frequency resource adjacent to the PSSCH frequency resource with the same time resource as at least a portion of the time resource of the PSSCH.

In step S204, the terminal 20A retransmits, using the resource autonomously selected in step S201, the SCI via PSCCH or PSSCH and the SL data via PSSCH to the terminal 20B. The retransmission in step S204 may be performed multiple times.

It is noted that, if the blind retransmission is not performed, step S204 may not be performed.

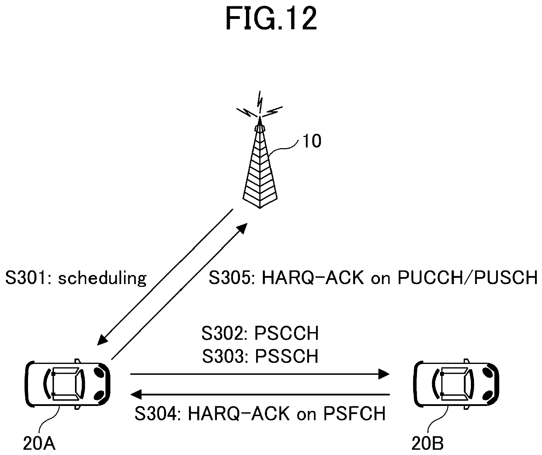

Fig. 12 is a sequence diagram illustrating an example (3) of V2X HARQ-ACK related operation. The base station 10 may perform scheduling of the sidelink. That is, the base station 10 may determine a sidelink resource to be used by the terminal 20 and transmit information indicating the resource to the terminal 20. In addition, in a case where HARQ control is applied, the base station 10 may transmit information indicating a PSFCH resource to the terminal 20.

In step S301, the base station 10 performs SL scheduling by transmitting DCI (Downlink Control Information) via PDCCH to the terminal 20A. For the sake of convenience, the DCI for SL scheduling is called an SL scheduling DCI.

Further, in step S301, the base station 10 may transmit DCI for DL scheduling (which may be referred to as DL allocation) via PDCCH to the terminal 20A. For the sake of convenience, the DCI for DL scheduling is called a DL scheduling DCI. The terminal 20A, which has received the DL scheduling DCI, receives DL data via PDSCH using a resource specified by the DL scheduling DCI.

In step S302 and step S303, the terminal 20A transmits, using the resource specified by the SL scheduling DCI, SCI (Sidelink Control Information) via PSCCH (or PSSCH) and transmits SL data via PSSCH. Note that, in the SL scheduling DCI, only a PSSCH resource may be specified. In this case, For example, the terminal 20A may transmit the PSCCH using a frequency resource adjacent to the PSSCH frequency resource with the same time resource as at least a portion of the time resource of the PSSCH.

The terminal 20B receives the SCI and the SL data (PSSCH) transmitted from the terminal 20A. The SCI received via the PSCCH or PSSCH includes information of a PSFCH resource for the terminal 20B to transmit HARQ-ACK in response to the data reception.

The resource information may be included in the DL scheduling DCI or SL scheduling DCI transmitted from the base station 10 in S301, and the terminal 20A may acquire the resource information from the DL scheduling DCI or the SL scheduling DCI and may include the acquired resource information in the SCI. Alternatively, the DCI transmitted from the base station 10 may not include the information of the resource, and the terminal 20A may autonomously include the information of the resource in the SCI and transmit the SCI including the information.

In step S304, the terminal 20B transmits a HARQ-ACK for the received data to the terminal 20A using the PSFCH resource specified by the received SCI.

In step S305, the terminal 20A transmits HARQ-ACK by using, for example, a PUCCH (Physical uplink control channel) resource specified by the DL scheduling DCI (or SL scheduling DCI) at the timing (e.g., the timing in slot units) specified by the DL scheduling DCI (or SL scheduling DCI), and the base station 10 receives the HARQ-ACK.

Note that, in a case where HARQ feedback control is not performed, at least one of step S304 and step S305 need not be performed.

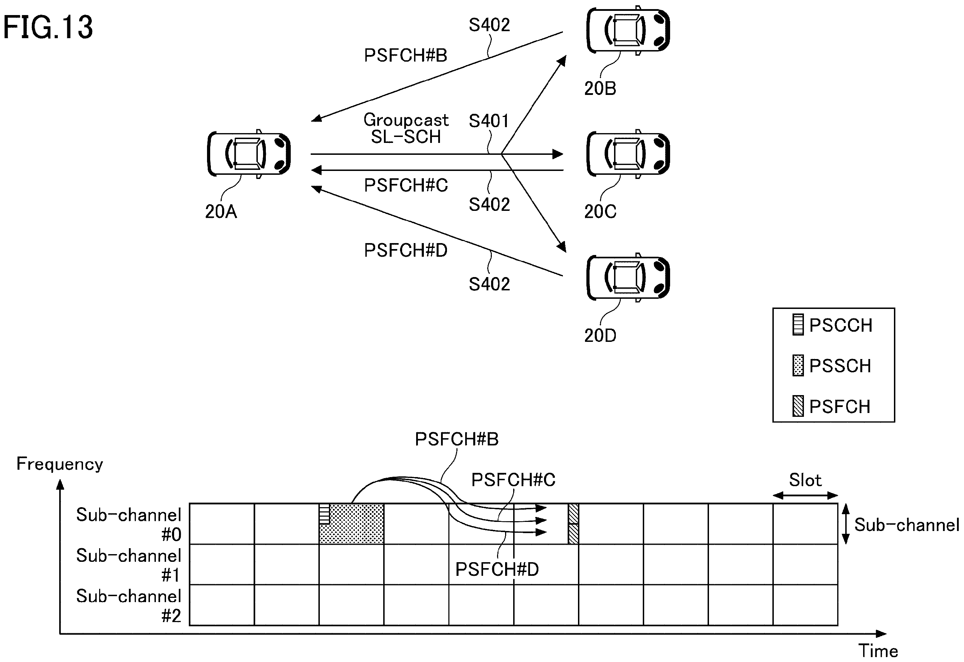

Fig. 13 is a sequence diagram illustrating an example (4) of V2X HARQ-ACK related operation. As described above, it is supported in the NR sidelink that the HARQ response is transmitted via PSFCH. Note that, with respect to the format of PSFCH, the same format as that of PUCCH (Physical Uplink Control Channel) format 0 can be used, for example. That is, the PSFCH format may be a sequence-based format with a PRB (Physical Resource Block) size of 1, ACK and NACK being identified by the difference of sequences or (or, and) cyclic shifts. The format of PSFCH is not limited to the above-described format. PSFCH resources may be located at the last symbol of a slot or a plurality of last symbols of a slot. Further, a period N may be configured or predefined for the PSFCH resource. The period N may be configured or predefined in a unit of slot.

In Fig. 13, the vertical axis corresponds to the frequency domain and the horizontal axis corresponds to the time domain. PSCCH may be arranged at the first (beginning) symbol, may be arranged at a plurality of first symbols of a slot, or may be arranged at a plurality of symbols from a symbol other than the first symbol of a slot. PSFCH resources may be arranged at the last (ending) symbol of a slot, or may be arranged at a plurality of last symbols. Note that the "beginning of a slot" may mean beginning symbols of X symbols that can be used for sidelink from among a plurality of symbols included in a slot, or may mean beginning symbols of the X symbols excluding the first symbol. Similarly, the "ending of a slot" may mean ending symbols of the X symbols, or may mean ending symbols of the X symbols excluding the last symbol. In an example shown in Fig. 13, three sub-channels are configured in a resource pool, and two PSFCHs are arranged in a slot after three slots from a slot in which PSSCH is arranged. Arrows from PSSCH to PSFCH indicate an example of PSFCH associated with PSSCH.

Fig. 13 illustrates an example of groupcast option 2 in which an ACK or NACK is transmitted in a HARQ response in the NR-V2X groupcast. As shown in Fig. 13, in step S401, the terminal 20A, which is the transmitting side terminal 20, performs groupcast with respect to the terminal 20B, the terminal 20C, and the terminal 20D, which are the receiving side terminals 20, via SL-SCH. In the subsequent step S402, the terminal 20B uses PSFCH#B, the terminal 20C uses PSFCH#C, and the terminal 20D uses PSFCH#D to transmit HARQ responses to the terminal 20A. Note that, in groupcast option 1, only NACK is transmitted as a HARQ response, and ACK is not transmitted.

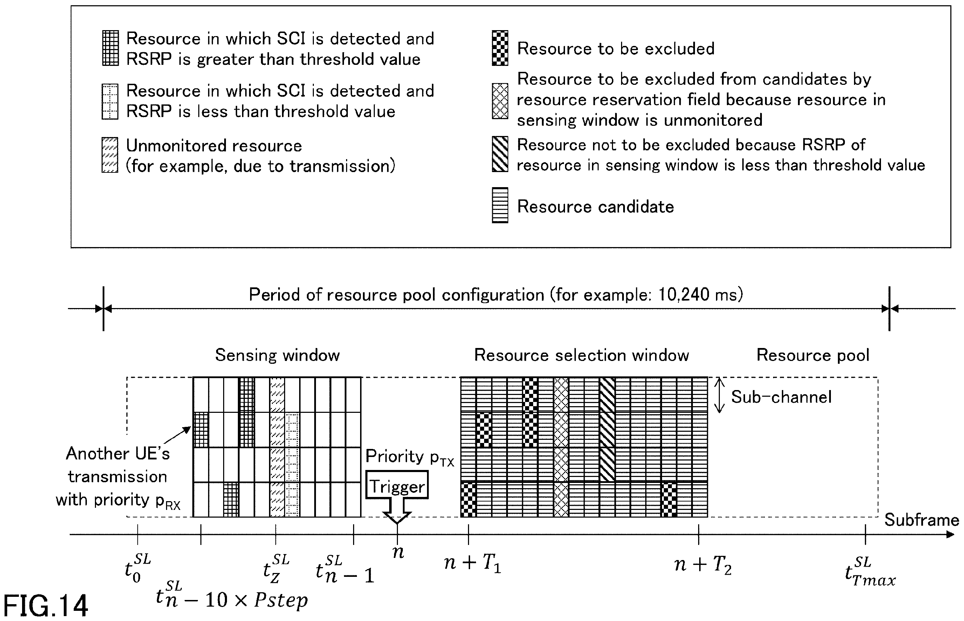

Fig. 14 is a drawing illustrating an example of a sensing operation as an example of a basic operation of a system in an embodiment of the present invention. Here, as an example, an example of a sensing operation in LTE is illustrated. In a case where the partial sensing is not configured by the upper layer in the LTE sidelink, the terminal 20 selects a resource and performs transmission as shown in Fig. 14. As illustrated in Fig. 14, the terminal 20 performs sensing in a sensing window in a resource pool. According to the sensing, the terminal 20 receives the resource reservation field contained in the SCI transmitted from another terminal 20 and identifies the available resource candidates in the resource selection window in the resource pool, based on the field. Subsequently, the terminal 20 randomly selects a resource from the available resource candidates. Sensing the entire resources in the sensing window may be referred to as full sensing.

Further, as shown in Fig. 14, the configuration of the resource pool may have a period. For example, the period may be a period of 10240 milliseconds. Fig. 14 is an example in which subframes from subframe t₀^{SL} to subframe t_{Tmax}^{SL} are configured as a resource pool. The resource pool within the period may have an area configured by, for example, a bitmap.

In addition, as illustrated in Fig. 14, it is assumed that a transmission trigger in the terminal 20 occurs in a sub-frame n and the priority of the transmission is p_{TX}. The terminal 20 can detect, for example, that another terminal 20 is performing transmission with priority p_{Rx} in a sensing window from subframe t_{n-10*Pstep}^{SL} to subframe tₙ₋₁^{SL}. In a case where an SCI is detected in the sensing window and the RSRP is greater than a threshold value, the resource in the resource selection window corresponding to the SCI is excluded. In addition, in a case where an SCI is detected in the sensing window and the RSRP is less than the threshold value, the resource in the resource selection window corresponding to the SCI is not excluded. The threshold value may be, for example, a threshold value Th_{pTx}, _{pRX} configured or defined for each resource in the sensing window, based on the priority p_{TX} and the priority p_{RX}.

In addition, a resource in the resource selection window corresponding to a resource in the sensing window that is not monitored due to the transmission, for example, such as the subframe t_{z}^{SL} shown in Fig. 14, is excluded.

In the resource selection window from subframe n+T₁ to subframe n+T₂, as shown in Fig. 14, a resource occupied by another UE is identified, and resources from which the identified resource is excluded become a set of available resource candidates. When the set of available resource candidates is referred to as S_{A}, in a case where the S_{A} is less than 20% of the resource selection window, the resource identification may be performed again by raising the threshold value Th_{pTx}, configured for each resource in the sensing window by 3 dB.

That is, resources, which are not excluded because the RSRP is less than the threshold value, may be increased by raising the threshold value Th_{pTx}, and then by performing the resource identification again. In addition, the RSSI of each resource in the S_{A} may be measured and the resource with the lowest RSSI may be added to the set S_{B}. The operation of adding the resource with the lowest RSSI included in the S_{A} to the S_{B} is repeated until the set S_{B} of resource candidates becomes equal to or greater than 20% of the resource selection window.

The lower layer of the terminal 20 may report the S_{B} to the upper layer. The upper layer of the terminal 20 may perform random selection for the S_{B} to determine a resource to be used. The terminal 20 may perform sidelink transmission using the determined resource. Note that the terminal 20 may use the resource periodically without performing the sensing for a predetermined number of times (e.g., Cᵣₑₛₑₗ times) after the resource is once secured.

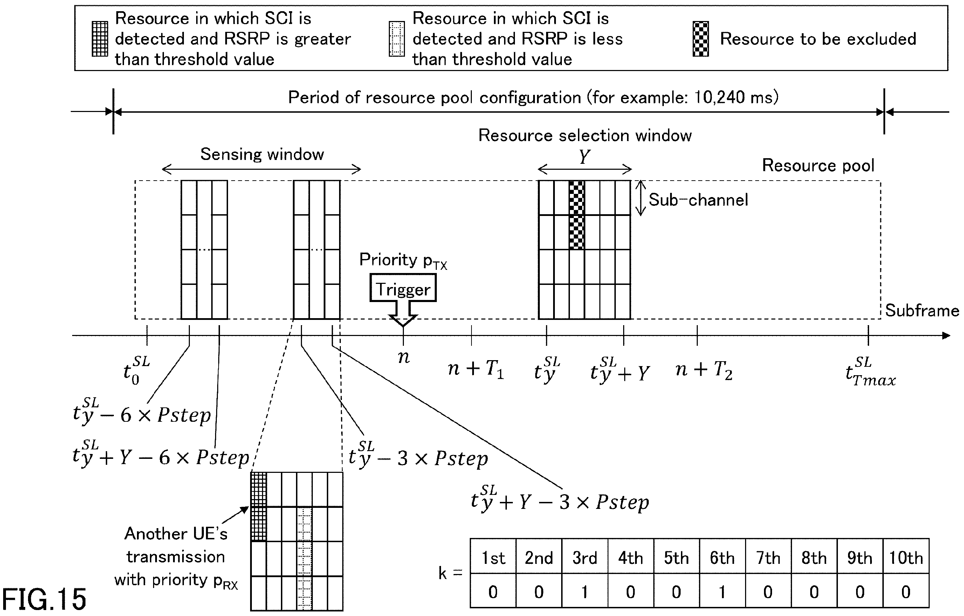

Fig. 15 is a drawing illustrating an example of a partial sensing operation. In a case where the partial sensing is configured by the upper layer in the LTE sidelink, the terminal 20 selects resources and perform transmission as shown in Fig. 15. As illustrated in Fig. 15, the terminal 20 performs partial sensing in a part of a sensing window in a resource pool. According to the partial sensing, the terminal 20 receives the resource reservation field contained in the SCI transmitted from the another terminal 20 and identifies the available resource candidates in the resource selection window in the resource pool, based on the field. Subsequently, the terminal 20 randomly selects a resource from the available resource candidates.

Further, as shown in Fig. 15, the configuration of the resource pool may have a cycle. For example, the cycle may be a period of 10240 milliseconds. Fig. 15 is an example in which subframes from subframe t₀^{SL} to subframe t_{Tmax}^{SL} are configured as a resource pool. The resource pool within the period may have an area configured by, for example, a bitmap.

As illustrated in Fig. 15, a transmission trigger in the terminal 20 occurs in subframe n and the priority of the transmission is p_{TX}. In an example of Fig. 15, from among the subframes from subframe n+T₁ to subframe n+T₂, Y subframes from subframe t_{y}^{SL} to subframe t_{y+y}^{SL} is configured as the resource selection window. Furthermore, as illustrated in Fig. 15, a transmission trigger in the terminal 20 occurs in subframe n and the priority of the transmission is p_{TX}.

The terminal 20 can detect, for example, that another terminal 20 is performing transmission with priority p_{RX} in one or more sensing windows from subframe t_{y-k×Pstep}^{SL} to subframe t_{y+Y-k×Pstep}^{SL}, the length of which being Y subframes. The k may be a 10-bit bitmap, for example. Fig. 15 shows an example in which the third and sixth bits of the bitmap are configured to be "1" indicating that the partial sensing is to be performed. That is, in Fig. 15, subframes from subframe t_{y-6×Pstep}^{SL} to subframe t_{y+Y-6×Pstep} ^{SL}, and subframes from subframe t_{y-3×Pstep}^{SL} to subframe t_{y+Y-3×Pstep}^{SL} are configured as the sensing windows. As described above, the i-th bit of the bitmap k may correspond to a sensing window from subframe t_{y-i×Pstep}^{SL} to subframe t_{Y+Y-i×Pstep}^{SL}.

In a case where an SCI is detected in one or more sensing windows and the RSRP is greater than a threshold value, the resource in the resource selection window corresponding to the SCI is excluded. In addition, in a case where an SCI is detected in the sensing window and the RSRP is less than the threshold value, the resource in the resource selection window corresponding to the SCI is not excluded. The threshold value may be, for example, a threshold value Th_{pTx}, configured or defined for each resource in the sensing window, based on the priority p_{TX} and the priority p_{RX}.

In a resource selection window in which Y subframes are configured, the terminal 20 identifies a resource occupied by another UE, and the resource excluding the identified resource becomes available resource candidates. When the set of available resource candidates is referred to as S_{A}, in a case where the S_{A} is less than 20% of the resource selection window, the resource identification may be performed again by raising the threshold value Th_{pTx}, configured for each resource in the sensing window by 3 dB. That is, resources, which are not excluded because the RSRP is less than the threshold value, may be increased by raising the threshold value Th_{pTx}, and then by performing the resource identification again. In addition, the RSSI of each resource in the S_{A} may be measured and the resource with the lowest RSSI may be added to the set S_{B}. The operation of adding the resource with the lowest RSSI included in the S_{A} to the S_{B} is repeated until the set S_{B} of resource candidates becomes equal to or greater than 20% of the resource selection window.

The lower layer of the terminal 20 may report the S_{B} to the upper layer. The higher layer of the terminal 20 may perform random selection for the S_{B} to determine a resource to be used. The terminal 20 may perform sidelink transmission using the determined resource. Note that the terminal 20 may use the resource periodically without performing the sensing for a predetermined number of times (e.g., Cᵣₑₛₑₗ times) after the resource is once secured.

An operation of the transmission-side terminal 20 has been described with reference to Fig. 14 and Fig. 15. The reception-side terminal 20 may detect data transmission from another terminal 20, based on a result of sensing or partial sensing and receive data from the another terminal 20.

The resource selection operation in NR (for example, Non-Patent Documents 2 and 3) is basically the same as the resource selection operation in LTE.

That is, TX-UE excludes, from S_{A}, the specific resources detected from all resources (referred to as Mₜₒₜₐₗ, initially, Mₜₒₜₐₗ = S_{A}) in the resource pool in the resource selection window, based on sensing in the sensing window. The specific resources include: resources that are reserved by an SCI received by TX-UE, wherein the RSRP (reception power) with respect to the SCI is greater than the threshold value; resources for which sensing is not performed; and the like.

In a case where the identified resource amount (the resource amount of S_{A}) is less than X% of the entire resource amount in the resource selection window in the resource pool, the above-described process is repeated by increasing the threshold value by 3 dB until the identified resource amount becomes equal to or greater than X%. For example, X may be 20. Note that one resource is, for example, a resource of "one slot * (one or more sub-channels)". In addition, RSRP may be a value measured by DM-RS of a PSCCH resource used for transmitting SCI, or may be a value measured by DM-RS of a PSSCH resource specified (reserved) by SCI.

In TX-UE, the determined S_{A} is reported to the upper layer, and, in the upper layer, a transmission resource is randomly selected from S_{A}. In NR, power saving may be performed based on the above-described partial sensing.

On the other hand, in NR release 16 sidelink, the preemption (pre-emption) check and reevaluation (reevaluation) function are adopted, and thus, the terminal 20 according to an embodiment of the present invention can perform the preemption check and the reevaluation. Although the preemption check and the reevaluation are functions for the resource allocation mode 2 in which the terminal 20 autonomously selects a resource to be transmitted, the preemption check and the reevaluation may be used in mode 1 in an embodiment of the present invention.

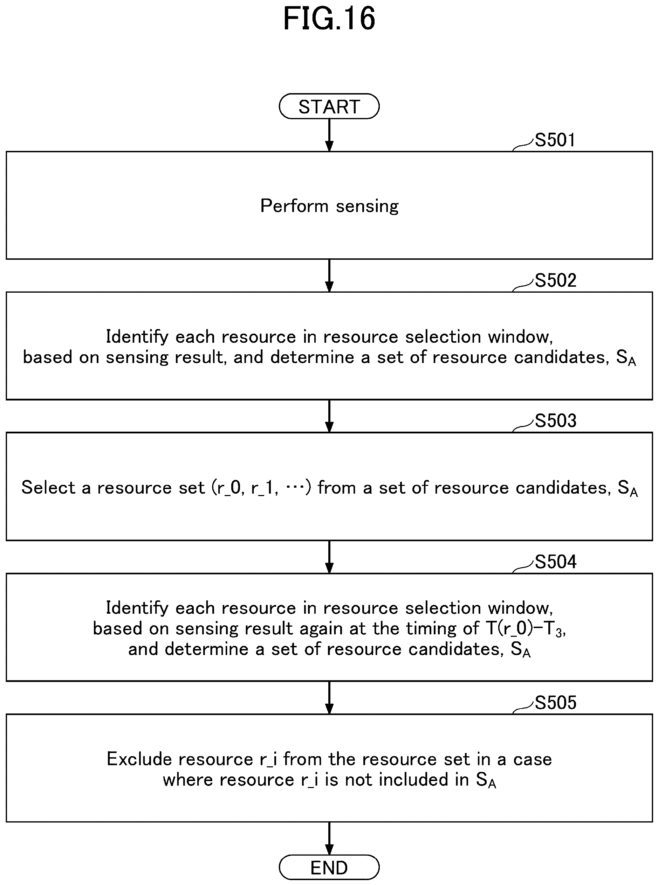

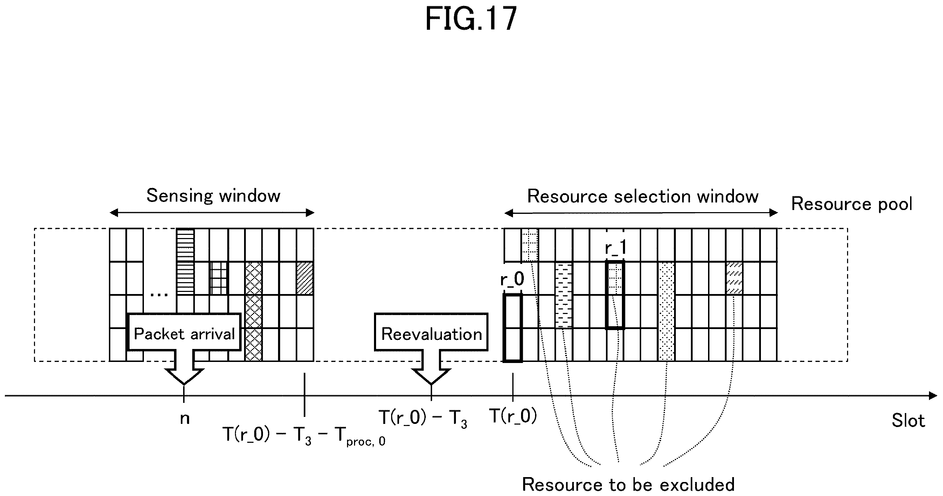

Fig. 16 is a flowchart illustrating an example of reevaluation. Fig. 17 is a drawing illustrating an example of reevaluation. In step S501, the terminal 20 performs sensing in the sensing window. In a case where the terminal 20 performs a power saving operation, the sensing may be performed in a limited period specified in advance. Subsequently, the terminal 20 identifies each resource in the resource selection window, based on the sensing result, and determines a set S_{A} of resource candidates (S502). Subsequently, the terminal 20 selects a resource set (r_0, r_1, ...) from the set S_{A} of resource candidates (S503). This resource set may be resources that are selected in the upper layer and are to be used for transmission.

In step S504, at the timing of T(r_0)-T₃ shown in Fig. 17, the terminal 20 identifies again each resource in the resource selection window, based on the sensing result to determine the set S_{A} of resource candidates. Subsequently, in a case where the resource r_i is not included in S_{A}, the resource set is updated by the terminal 20 by excluding r_i from the resource set (S505), and the reevaluation ends. In the upper layer, a resource is selected from the resource set after the reevaluation.

In an example of reevaluation illustrated in Fig. 17, from among the resource r_0 and the resource r_1, r_1 is excluded from the resource set because r_1 is not included in S_{A} based on the repeated sensing result. Therefore, the terminal 20 performs transmission using the resource r_0.

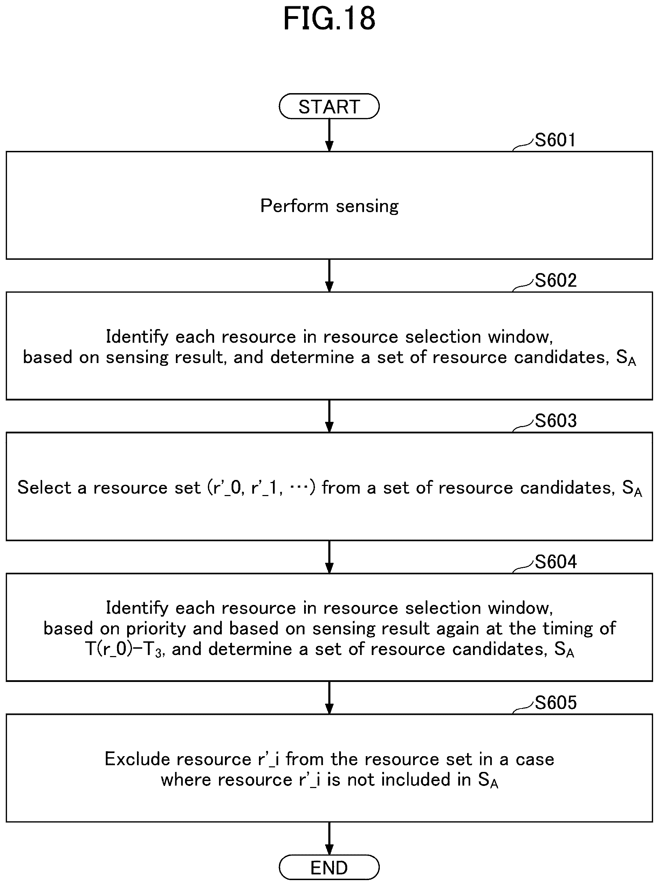

Fig. 18 is a sequence diagram illustrating an example of a preemption check. An operation will be described by replacing "reevaluation" with "preemption check", and replacing "r_0" and "r_1" with "r'_0" and "r'_1", respectively, in Fig. 17. In step S601, the terminal 20 performs sensing in the sensing window. In a case where the terminal 20 performs a power saving operation, the sensing may be performed in a limited period specified in advance. Subsequently, the terminal 20 identifies each resource in the resource selection window, based on the sensing result, and determines a set S_{A} of resource candidates (S602). Subsequently, the terminal 20 selects a resource set (r'_0, r'_1, ...) from the set S_{A} of resource candidates (S603). This resource set may be resources that are selected in the upper layer and are to be used for transmission.

In step S604, at the timing of T(r_0)-T₃ shown in Fig. 17, the terminal 20 identifies again each resource in the resource selection window, based on the sensing result and based on the priority to determine the set S_{A} of resource candidates. For example, r'_1 illustrated in Fig. 17 is included in the set S_{A} according to the sensing again.

In a case where the preemption check is enabled, in a case where the value prio_RX indicating the priority of the SCI transmitted from another terminal 20 is lower than the value prio_TX indicating the priority of the transport block to be transmitted from the terminal 20 itself, the terminal 20 excludes the resource r'_1 from S_{A}. Note that the lower the value indicating the priority, the higher the priority. In other words, in a case where the value prio_RX indicating the priority of the SCI transmitted from another terminal 20 is higher than the value prio_TX indicating the priority of the transport block to be transmitted from the terminal 20 itself, the terminal 20 does not exclude the resource r'_1 from S_{A}.

Hereinafter, with respect to the priority, in a case of describing "high", the priority is high.

In step S605, in a case where the resource r'_i is not included in S_{A}, the resource set S_{A} is updated by the terminal 20 by excluding r'_i from the resource set (S605). In this case, r'_1 is determined to be unavailable based on the upper layer parameter, and prio_TX and prio_RX, and the preemption check ends. The terminal 20 selects a transmission resource from the updated S_{A}.

### (Regarding mode 1)

The technologies described in an embodiment of the present invention are not limited to a specific wireless method such as NR or LTE, and are not limited to a specific mode, and as an example, NR mode 1 (resource allocation mode 1) is assumed to be used together with the above-described mode 2. Here, an overview of mode 1 will be described.

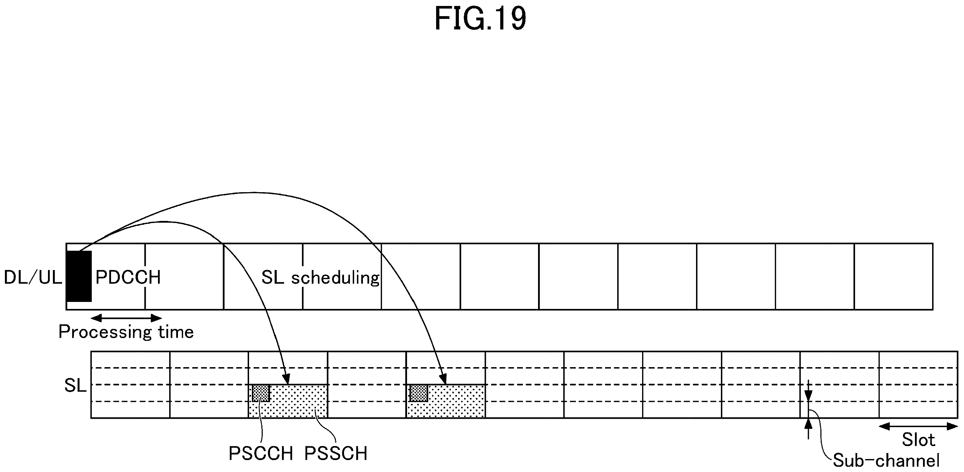

As described with reference to Fig. 2, etc., in mode 1, SL transmission resources are allocated from the base station 10 to the terminal 20. That is, as illustrated in Fig. 19, the SL transmission resource (i.e., PSCCH. PSCCH) is allocated to the terminal 20 according to PDCCH (specifically, DCI) received from the base station 10, and the terminal 20 performs SL transmission using the resource.

More specifically, there are dynamic grant (DG), configured grant (CG) type 1, and CG type 2, in the SL transmission allocation from the base station 10 to the terminal 20. In mode 1, DCI format 3_0 is used for DG and CG type 2. Note that the monitoring occasion of DCI format 3_0 is configured separately from other formats.

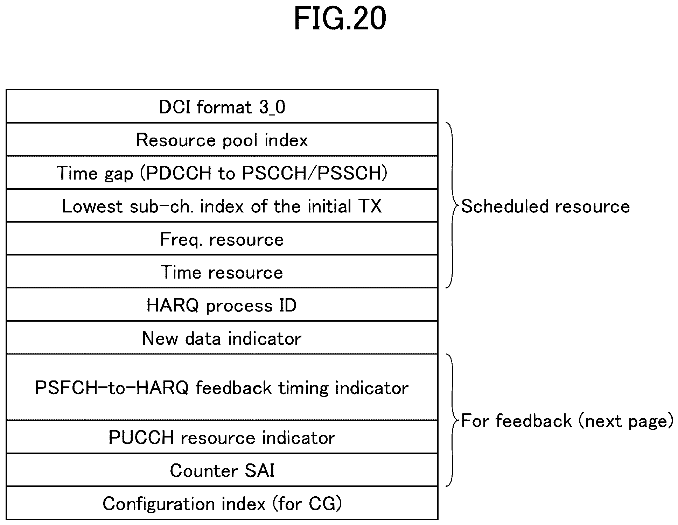

Fig. 20 illustrates an example of fields of DCI format 3_0. As illustrated in Fig. 20, the information indicated by DCI format 3_0 includes: resource information to be scheduled; information related to initial transmission/retransmission; and information related to feedback. With respect to the information related to the initial transmission/retransmission, the transmission-side terminal 20A manages relationship between the HPN (HARQ Process Number) specified by DCI format 3_0 and the HPN in the SCI.

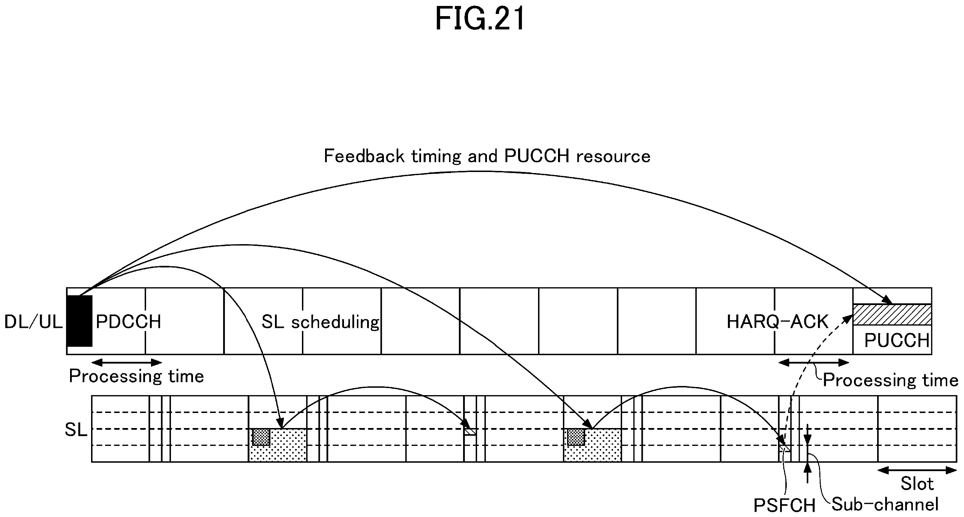

In addition, with respect to the feedback, descriptions have already been made with reference to Fig. 12, etc. Fig. 21 illustrates resources in a case described with reference to Fig. 12. As illustrated in Fig. 21, the HARQ-ACK, which is transmitted as a feedback to the terminal 20A via PSFCH, can be transmitted as a feedback to the base station 10 via PUCCH.

### (Regarding the problem to be solved)

It is assumed that SL services will be provided by multiple different carriers in the same region. Hereafter, the carrier will be referred to as an "operator" .

That is, multiple terminals 20 belonging to different operators are assumed to exist at distances to which signals can reach each other. In such an environment, SL communication by multiple terminals 20 results in uncontrolled SL transmission from an operator's perspective. For example, an SL signal transmitted by a terminal 20A belonging to operator A using a resource scheduled from a base station 10A may interfere with a terminal 20B of operator B performing signal reception.

Hereinafter, Examples 1-5 will be described as specific techniques for solving the above-described problems. Examples 1-5 may be implemented in any combination. Further, in Examples 1 to 5, it is assumed that synchronization is achieved in communication systems between multiple operators.

### (Example 1)

### <Basic operation>

Example 1 will be described first. In the Example 1, the terminal 20, for which an SL transmission is scheduled, determines: whether the scheduled SL transmission can be performed; or the resource that can be transmitted, based on a signal received from another terminal 20.

That is, the terminal 20 of one operator scheduled for SL transmission avoids collision of the signal with the terminal 20 belonging to another operator based on information learned by an SL signal received from the terminal 20 belonging to the other operator. Basically, in the Example 1, the terminal 20 of an operator for which SL transmission is scheduled performs sensing of the SL signal transmitted from the terminal 20 belonging to the other operator to avoid a collision, similar to sensing of mode 2 described above.

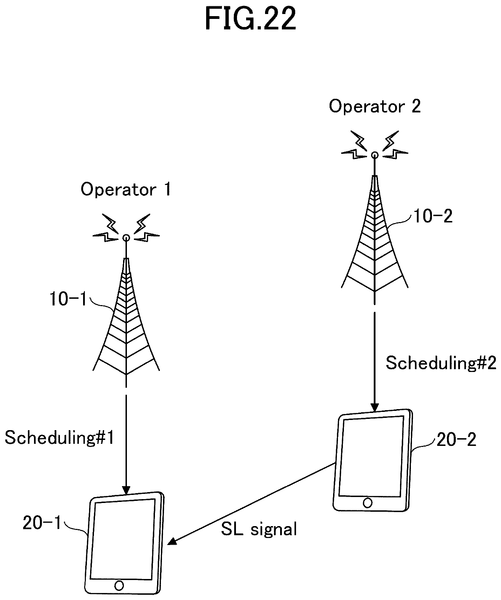

A specific example will be described with reference to Fig. 22. As shown in Fig. 22, the base station 10-1 of the operator 1, the terminal 20-1 of the operator 1, the base station 10-2 of the operator 2, and the terminal 20-2 of the operator 2 are present.

The terminal 20-1 is scheduled by the scheduling #1 from the base station 10-1, and the terminal 20-2 is scheduled by the scheduling #2 from the base station 10-2.

The terminal 20-2 transmits a SL signal based on the scheduling #2, and the terminal 20-1 receives the SL signal. The terminal 20-1 determines whether or not to use the resource allocated by the scheduling #1 based on the SL signal received from the terminal 20-2.

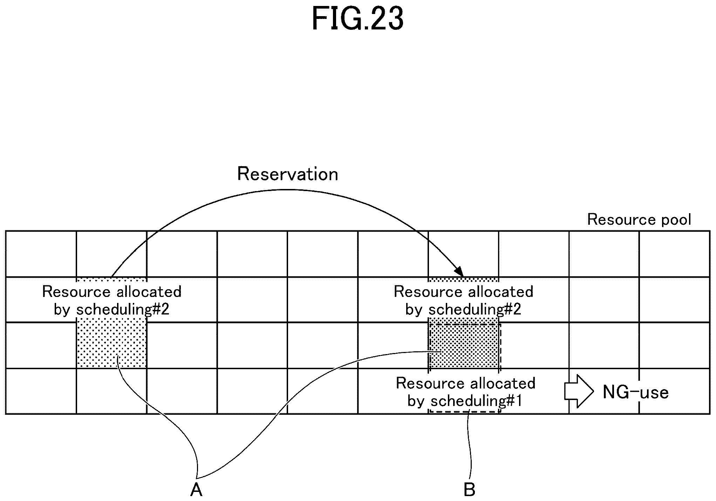

For example, the terminal 20-1 receives an SCI as a SL signal from the terminal 20-2, and determines that the resources indicated by A in Fig. 23 are reserved according to the SCI. On the other hand, the resource indicated by B is allocated as a SL transmission resource for the terminal 20-1 according to the scheduling #1.

In a case where the terminal 20-1 determines that the resource reserved by the terminal 20-2 collides with the resource B that is allocated to the terminal 20-1, the terminal 20-1 determines that the resource B cannot be used, and does not perform SL signal transmission using the resource B. This avoids interference to one or more terminals 20 of the operator 2 .

In the above example, the terminal 20-1 determines whether the resource that is allocated for the terminal 20-1 can be used, based on the information of resource reservation received from the terminal 20-2. This is an example. The terminal 20-1 may determine whether the resource that is allocated for the terminal 20-1 can be used, based on one of or both the information indicated by the time resource assignment field, and the information indicated by the resource reservation period field, in the SCI received from the terminal 20-2.

Also, the terminal 20-1 may determine whether the resource that is allocated by the base station 10-1 can be used, based on the reception power of the SL signal received from the terminal 20-2. For example, the terminal 20-1 may determine that the resource can be used in a case where: the reception power of a resource received from the terminal 20-2 is equal to or greater than a threshold value; and a part of or all of the resource overlaps with a part of or all of the resource that is allocated by the base station 10-1.

In addition, when determining whether the resource allocated by the base station 10-1 can be used, the terminal 20-1 may perform the same operation as the above-described re-evaluation (reevaluation) or the preemption (preemption) check by assuming the resource allocated by the base station 10 as the resource selected by the terminal 20-1 itself in mode 2.

### <Operation of selecting a resource to be used>

In the above example, the terminal 20-1 determines whether the resource allocated by the base station 10 can be used, based on the SL signal received from another terminal. As a more detailed operation, the following operation of selecting a resource to be used may be performed.

In the operation of selecting a resource to be used, as the resources that can be used for SL transmissions, a plurality of resources are allocated from the base station 10-1 to the terminal 20-1. The terminal 20-1 selects a resource that can be used from among the plurality of resources, based on the SL signal received from the terminal 20-2, and performs SL transmission using the selected resource.

For example, it is assumed that four resources of A, B, C, and D are allocated to the terminal 20-1 from the base station 10-1, as the resources that can be used for SL transmissions. In a case where the terminal 20-1 determines that the resources A and B are used (including that the resources A and B are reserved) by the terminal 20-2, based on the SL signal received from the terminal 20-2, the terminal 20-1 performs SL transmission using one of or both the resources C and D.

The plurality of resources allocated by the base station 10-1 may be allocated by a plurality of DCIs, or may be allocated together by one DCI. The plurality of resources that are allocated together may be four or more resources.

In addition, a plurality of resources may be treated as a set, and a set from among a plurality of sets may be indicated from the base station 10-1 to the terminal 20-1.

For example, in a case where a set 1 including four resources A, B, C, and D is specified from the base station 10-1 to the terminal 20-1 as a set of resources that can be used, the terminal 20-1 selects a resource to be used from among the resources A, B, C, and D included in the set 1.

In addition, in an operation of selecting a resource to be used in which a plurality of resources are allocated from the base station 10-1 to the terminal 20-1, as described referring to Fig. 12, the terminal 20-1 may perform feedback to the base station 10. In this case, the terminal 20-1 may determine a resource (for example: a time resource, a frequency resource, or a time and frequency resource) for the feedback, based on a specific (for example: "the last in the time domain" or "the first in the time domain") resource from among the plurality of resources. The resource for the feedback is not required to be based on the resource actually used for SL transmission.

For example, it is assumed that the resources of A, B, C, and D are allocated to the terminal 20-1 as the plurality of resources and an SL transmission is performed using the resource A. In addition, in a case where the last resource in the time domain from among the resources A, B, C, and D is the resource D, for example, the terminal 20-1 transmits a feedback for the SL transmission via the resource A to the base station 10 in a slot after a predefined number of slots from the slot of the resource D.

### <Operation of reporting to the base station>

The terminal 20-1 may transmit a NACK to the base station 10-1 in a case where the SL transmission using the resource allocated by the base station 10-1 is not performed based on the reception of a signal from the terminal 20-2, for example.

In addition, in the above-described operation of selecting a resource to be used, the terminal 20-1 may report, to the base station 10, the resource that is not used for SL transmission among the plurality of resources allocated by the base station 10-1.

### <For resource groups>

In Example 1, a group of resources available for SL transmission (e.g., a transmission resource pool) may be common among operators. The resource group available for SL transmission may also be the same as a resource group (e.g., reception resource pools) that should receive the SL signal (i.e., monitor the SL signal).

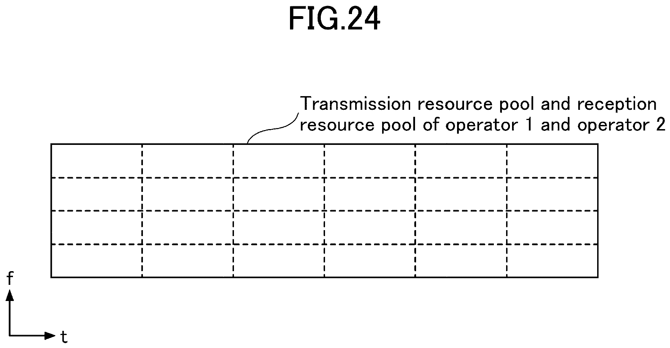

An example is shown in Fig. 24. In the example shown in FIG. 24, the transmission resource pool and the reception resource pool are the same, and the transmission resource pool and the reception resource pool are the same for operator 1 and operator 2.

### <Effects of Example 1>

It is assumed that the terminal 20, which performs an operation of mode 1, also supports an operation of mode 2. In the Example 1, there are effects in which collision between terminals operating in mode 1 can be avoided while reducing additional terminal implementations, because signal collision with other operator's terminals 20 is avoided by performing the same operations as the sensing in mode 2, and the reevaluation (reevaluation), or the pre-emption (preemption) check.

### (Example 2)

Example 2 assumes Example 1 described above. In Example 2, a part of resources (e.g., receiving resource pool) by which a SL signal is to be received (i.e., the SL signal is to be monitored) may be resources (e.g., the transmission resource pool) that can be used to transmit a SL signal.

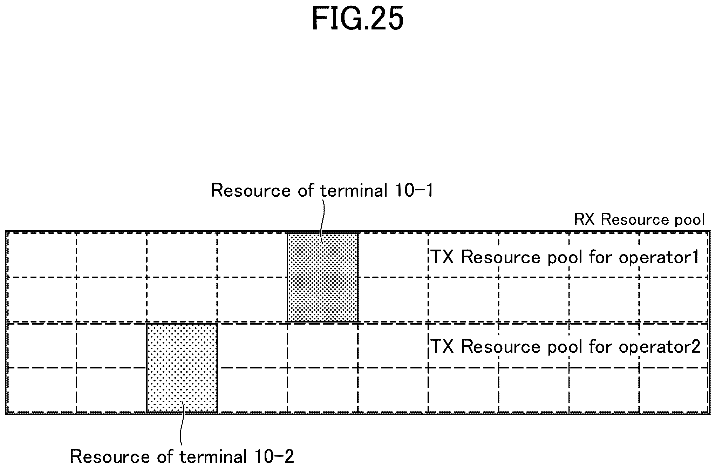

Fig. 25 shows an example of a transmission resource pool (TX resource pool) and a reception resource pool (RX resource pool). The example shown in Fig. 25 assumes a situation where the base station 10-1 and the terminal 20-1 belonging to the operator 1, and the base station 10-2 and the terminal 20-2 belonging to the operator 2 are present, as shown in Fig. 22.

As shown in FIG. 25, in this example, the reception resource pool is common between operator 1 and operator 2. On the other hand, a portion of the reception resource pool (upper half in the example of Fig. 25) is a transmission resource pool of operator 1, and another portion of the reception resource pool (lower half in the example of Fig. 25) is a transmission resource pool of operator 2. That is, a transmission resource pool is separated between operators.

The resource pool configuration as described above may be predetermined in the specification, and the terminal 20 and the base station 10 of each operator may operate in accordance with the specification, or the terminal 20 may be configured by a RRC signal, a MAC CE, or a DCI in each operator from the base station 10.

As shown in Fig. 25, by configuring the resource pool to separate transmission resource pools between operators, collision between allocated resources to the terminal 20-1 and allocated resources to the terminal 20-2 can be avoided.

### <Effect of Example 2>

As described above, in the Example 2, collision avoidance of SL transmission between a terminal 20 belonging to an operator and a terminal 20 belonging to another operator can be performed by a predetermined configuration. Thus, it can be realized that a collision of SL transmission between terminals under different operator control does not occur.

### (Example 3)

Next, Example 3 will be described. Example 3 assumes Example 1 and Example 2. However, Example 3 may assume only Example 1. Alternatively, it may be combined with other Examples.

In the Example 3, SCI transmitted by the terminal 20 may include information indicating an operator to which the base station 10, which performed corresponding scheduling, belongs. Information indicating the operator may be a PLMN (Public Land Mobile Network) number of the operator.

For example, correspondence between PLMNs and SCI field values may be performed from the base station 10 to the terminal 20 at a higher layer, and when the terminal 20 transmits an SCI, a PLMN may be specified by specifying one of the field values.

For example, one operator's terminal 20 may perform a collision avoidance operation as described in Example 1 only when it receives a SL signal from another operator (i.e., a SL signal containing information identifying another operator).

### (Example 4)

Example 4 will now be described. Example 4 may be implemented without assuming Examples 1-3, or may be implemented in combination with any one or more of Examples 1-3.

In the Example 4, the terminal 20 receives information A related to SL from the base station 10 and transmits information B based on the information A to another terminal 20. The other terminal 20 may transmit information C based on the information B to the base station 10 of the operator to which it belongs.

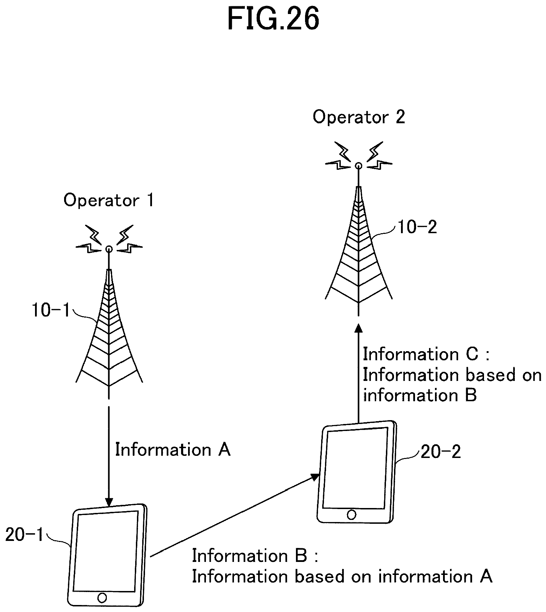

An example of the flow of information when information A, B, and C are used as described above is shown in Fig. 26. In the example of Fig. 26, the base station 10-1 and the terminal 20-1 belonging to the operator 1, the base station 10-2 and the terminal 20-2 belonging to the operator 2, exist. The terminal 20-1 receives the information A from the base station 10-2 and transmits the information B based on the information A to the terminal 20-2. The terminal 20-2 transmits information C based on the information B to the base station 10-2.

Note that, to perform operation that the terminal 20-1 transmits the information B based on the information A received from the base station 10-1 to the terminal 20-2 and the operation that the terminal 20-2 transmits the information C based on the information B to the base station 10-2 are not mandatory, and one or both of the above operations may not be executed.

In Example 4, through the above-described operation, a terminal 20 belonging to an operator avoids collision of SL transmission with another terminal 20 belonging to another operator based on information from the base station 10 of the operator or information from the other terminal 20.

Hereinafter, an example of the operation pertaining to transmission and the contents of the information will be described with reference to the case shown in Fig. 26, respectively for the information A, the information B, and the information C.

### <For information A>

In FIG. 26, a signal containing the information A transmitted from the base station 10-1 to the terminal 20-1 may be a UE-specific DCI, a group-common DCI, or a higher layer signaling (e.g., MAC CE, RRC signal).

The information A transmitted from the base station 10-1 to the terminal 20-1 may be information pertaining to a resource of SL transmission scheduled by the base station 10-1 to one or more terminals (e.g., all terminals under control) under its own control. That is, for example, in the case where the terminal 1, the terminal 2, and the terminal 3 exist under the control of the base station 10-1, the information A may include resource information of the SL transmission scheduled for the terminal 1, resource information of the SL transmission scheduled for the terminal 2, and resource information of the SL transmission scheduled for the terminal 3.

The information A may be information pertaining to a resource of SL transmission that is scheduled, by a base station (in the example of Fig. 26, the base station 10-2) of an operator other than the operator 1 to which the base station 10-1 that transmits the information A belongs, to one or more terminals (for example, all terminals under control) under the control of the base station.

In any of the above-described cases, the information A transmitted from the base station 10-1 to the terminal 20-1 may include scheduling information of SL transmission to the terminal 20-1.

The terminal 20-1 may perform a predetermined operation when a part of or all of resources allocated from the base station 10-1 to the terminal 20-1 for SL transmission overlap a part of or all of resources indicated by the information A (e.g., SL transmission resources in other operators).

The predetermined operation by the terminal 20-1 is to stop SL transmission using the resources allocated to it, for example. In this case, the terminal 20-1 may transmit NACK to the base station 10-1.

The predetermined operation by the terminal 20-1 may be performing SL transmission utilizing the resources allocated to it by increasing the transmitting power. The predetermined operation by the terminal 20-1 may be normally executing SL transmission utilizing the resources allocated to it.

As to which operation to perform among the above operations (transmission stop, transmission power increase, normal transmission), it may be determined based on at least one of the following: Priority of allocated resources, Order of allocation of resources, and whether the resource can be reserved. As an example, if the priority of the allocated resource is high, middle, or low, the transmission power is increased when priority is high. If the priority is middle, normal transmission is performed. If the priority is low, transmission is stopped.

### <For information B>

The terminal 20-1 may transmit the information B whenever it receives the information A, or it may transmit the information B only when it determines whether a predetermined condition is fulfilled and determines that the predetermined condition is fulfilled. The predetermined condition is, for example, that transmission is scheduled at a predetermined time (e.g., slot or time window).

As an example, the terminal 20-1 transmits the information B, for example, at a timing of SL transmission, when the SL transmission is scheduled from a time when the information A is received (for example, at slot k) to a time n slots ahead (that is slot k+n). "SL transmission is scheduled" means, for example, that the SL transmission is scheduled for the terminal 20-1 or that the terminal 20-1 is scheduled to perform SL transmission with autonomously selected resources.

The terminal 20-1 may transmit the information B with a resource dedicated to transmitting the information B or with a resource predetermined as a separate resource between operators. As an example, suppose that resource B1 is configured to terminal 20-1 in operator 1 for transmitting information B, and resource B2 is configured to terminal 20-2 in operator 2 for transmitting information B. At this time, the terminal 20-1 transmits the information B using resource B1.

The terminal 20-1 may unconditionally transmit the information B after a resource for transmitting the information B is allocated. A predetermined (e.g., the highest) priority may be assigned to the resource for transmitting the information B, and the terminal 20-1 may transmit the information B according to the priority.

The signal containing information B transmitted by the terminal 20-1 may be transmitted by a data channel, by a control channel, by a feedback channel, or by other dedicated channels.

The signal including the information B transmitted by the terminal 20-1 may be an SCI. When using the SCI, the format of the SCI may be in any format. The format of the SCI may also be a format dedicated to the SCI in which information B is included.

The signal including the information B transmitted by the terminal 20-1 may be transmitted by upper layer signaling (e.g., MAC CE, RRC signal). The signal including the information B transmitted by the terminal 20-1 may be transmitted by any one of broadcast/groupcast/unicast.

The information B transmitted by the terminal 20-1 may be, for example, information of a resource that a terminal 20 of an operator other than the operator 1 to which the terminal 20-1 belongs cannot use for SL transmission. The information of the resource that cannot be used for SL transmission may be information of a resource that is to be used by a terminal 20 other than the terminal 20 receiving the information B.

For example, when information of a resource for SL transmission scheduled from the base station 10-1 to the terminal 20-1 is transmitted to one or more terminals 20 under the control of the operator 1 as the information A, the terminal 20-1 may transmit the information A as the information B (that is, information of a resource that cannot be used for SL transmission for terminals 20 of the other operators).

The terminal 20-2 that receives the information B may perform a predetermined operation when a part or all of resources allocated for SL transmission from the base station 10-2 to itself overlap a part or all of resources indicated by the information B (e.g., SL transmission resources in other operators).

The predetermined operation by the terminal 20-2 is to stop SL transmission using, for example, the resources allocated to it. In this case, the terminal 20-2 may transmit NACK to the base station 10-2.

The predetermined operation by the terminal 20-2 may be to perform SL transmission utilizing the resources allocated to it by increasing transmitting power. The predetermined operation by the terminal 20-2 may be normally executing SL transmission utilizing the resources allocated to it.

As to which operation to perform among the above operations (transmission stop, transmission power increase, normal transmission), it may be determined based on at least one of the following: Priority of allocated resources, Order of allocation of resources, and whether the resource can be reserved. As an example, if the priority of the allocated resource is high, middle, or low, the transmission power is increased if the priority is high. If the priority is middle, normal transmission is performed. If priority is low, transmission is stopped. The above may be based on at least one of priority, order of assignments, and whether the resource can be reserved.

### <About information C>

In Fig. 26, the terminal 20-2 may transmit the information C to the base station 10-2 each time when the information B is received or it may transmit the information C to the base station 10-2 only when a predetermined condition is satisfied. The predetermined condition may be that "information B has been received."

The predetermined condition may also be one in which, for example, UL transmission is scheduled to perform at a predetermined time (e.g., slot or time window).

As an example, the terminal 20-2 transmits the information C, for example, at a time of UL transmission when the UL transmission is scheduled from a time when the information B was received (for example, at slot k) to a time n slots ahead (that is slot k+n). "UL transmission is scheduled" may be, for example, UL transmission is scheduled for terminal 20-2 or UL transmission is to be performed by the terminal 20-2 with autonomously selected resources.

The terminal 20-2 may transmit the information C with periodic resources. The base station 10-2 may schedule aperiodic resources to the terminal 20-2, and the terminal 20-2 may transmit the information C using the aperiodic resources.

The signal containing the information C to be transmitted by the terminal 20-2 may be transmitted by a data channel, by a control channel, by a feedback channel, or by a dedicated channel.

The signal containing the information C transmitted by the terminal 20-2 may be UCI. When using UCI, the UCI format may be any format. In addition, a format dedicated to UCI containing information C may be used as the format of UCI.

The signal including the information C transmitted by the terminal 20-2 may be transmitted by upper layer signaling (e.g., MAC CE, RRC signal).

Hereinafter, examples 4-1 to 4-3 will be described with reference to the drawings as specific operation examples of the above-described information A, B, and C.

### <Example 4-1>

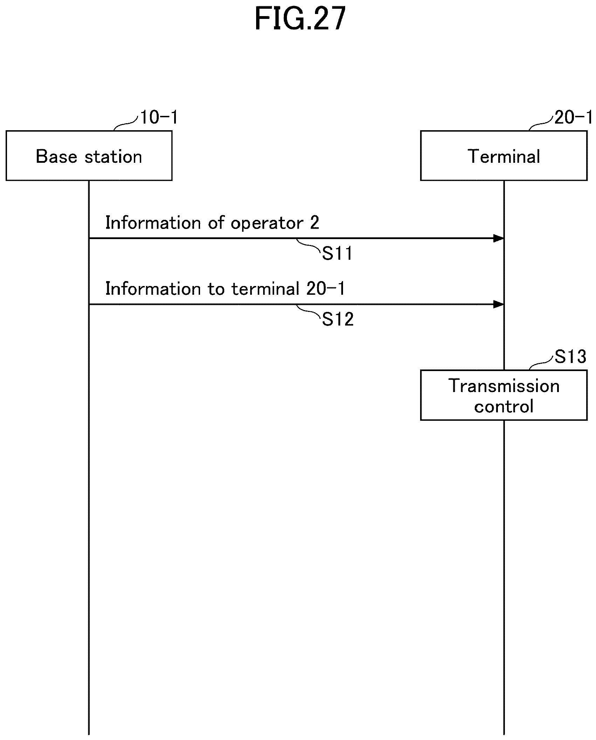

Fig. 27 is a diagram for explaining Example 4-1. In S11, the terminal 20-1 of the operator 1 receives, as information A, information of a resource allocated for SL transmission to one or more terminals 20 in the operator 2 from the base station 10-1.

In S12, the terminal 20-1 receives information of a resource for SL transmission to itself. In S13, the terminal 20-1 compares information of the resource allocated by the operator 2 indicated by the information A received in S11 with the information of the self-addressed resource received in S12, and performs transmission control such as determination of whether or not to execute SL transmission using the allocated resource in S12. Specifically, as described above, for example, transmission is stopped, transmission with increased transmission power is performed, or transmission is normally performed.

### <Example 4-2>

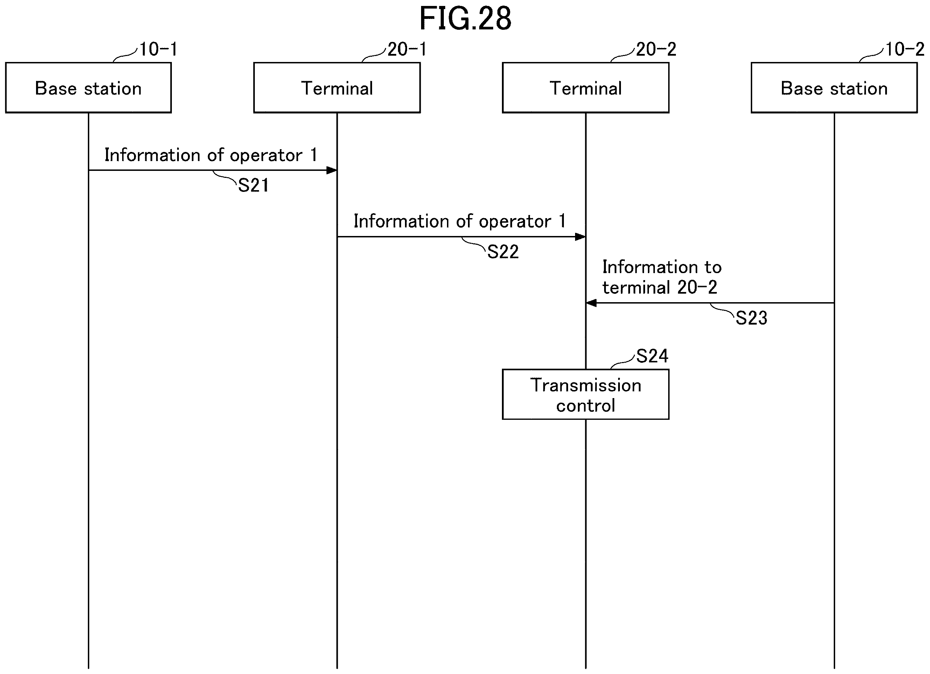

Fig. 28 is a diagram for explaining Example 4-2. In S22, the terminal 20-1 of the operator 1 receives, as information A, information of resources allocated for SL transmission to one or more terminals 20 in the operator 1 from the base station 10-1.

In S22, the terminal 20-1 transmits the information received as the information A as information B to the terminal 20-2.

In S23, the terminal 20-2 receives information on resources for SL transmission to itself. In S24, the terminal 20-2 compares the information of the resource allocated by the operator 1 indicated by the information B received in S22 with the information of the self-addressed resource received in S23 to perform transmission control such as determination of whether or not to execute SL transmission using the allocated resource in S23. Specifically, as described above, for example, transmission is stopped, transmission with increased transmission power is performed, or transmission is normally performed.

### <Example 4-3>

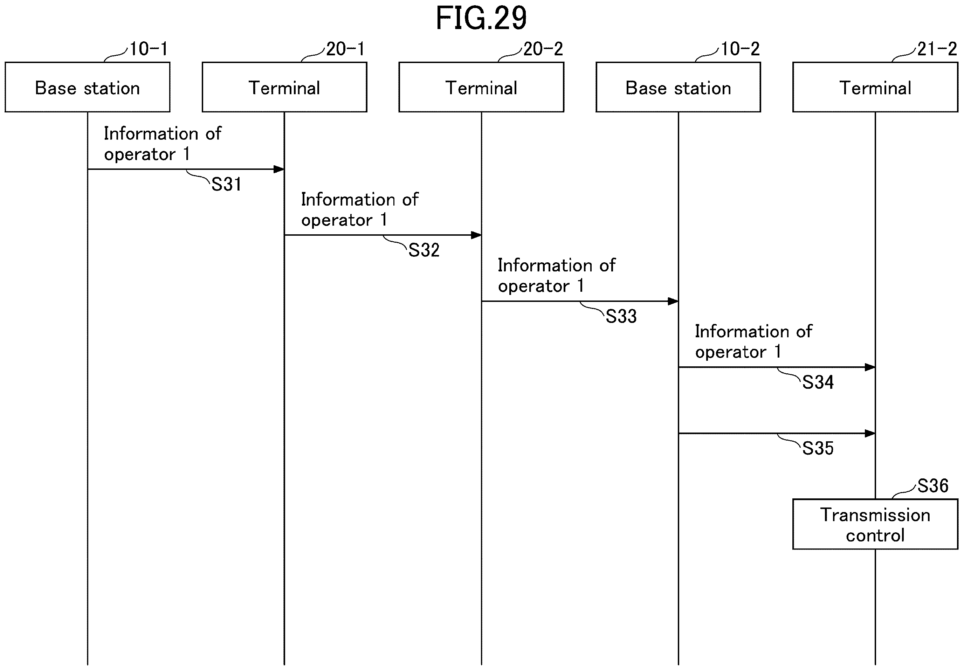

Fig. 29 is a diagram for explaining Example 4-3. In S31, the terminal 20-1 of the operator 1 receives information of resources allocated for SL transmission to one or more terminals 20 of the operator 1 from the base station 10-1 as information A.

In S32, the terminal 20-1 transmits the information received as the information A as information B to the terminal 20-2. In S33, the terminal 20-2 transmits the information received as the information B as information C to the base station 10-2.

In Example 4-3, the terminal 21-2 is shown as a terminal of the operator 2 in addition to the terminal 20-2. In S34, the terminal 21-2 receives information of resources allocated for SL transmission to one or more terminals 20 in the operator 1 from the base station 10-2 as information A.

In S35, the terminal 21-2 receives information on resources for SL transmission to itself. In S36, the terminal 21-2 compares the information of the resource allocated by the operator 1 indicated by the information A received in S34 with the information of the self-addressed resource received in S35, and performs transmission control such as determination of whether or not to execute SL transmission using the allocated resource in S35. Specifically, as described above, for example, transmission is stopped, transmission with increased transmission power is performed, or transmission is normally performed.

In the above example, the base station 10-2 may perform scheduling at S35 to avoid collision with resources of the operator 1 based on information C. That is, the base station 10-2 may determine a resource for SL transmission by the terminal 21-2 so as to avoid collision with the resources of the operator 1 based on the information C and transmit the allocation information of the resource to the terminal 21-2.

### <Effect of Example 4>

In Example 4, for example, each operator's base station 10 can know another operator's SL assignment status. The base station 10 may know how to know the SL assignment status of another operator from a report from the terminal 20 or by transmitting and receiving information between the base stations.

According to the above described technique, the base station 10 can perform scheduling for the terminal 20 under the base station's control such that no transmission collision occurs with terminals 20 of another operator. Further, according to the Example 4, the terminal 20 can know SL assignment status of other operators and can perform transmission collision avoidance operation based on the SL assignment status.

### (Example 5)

Next, Example 5 will be described. Example 5 may be implemented without assuming Examples 1-4, or may be implemented in combination with any one or all of Examples 1-4.

In the Example 5, the terminal 20 performing SL transmission connects to base stations 10 of a plurality of operators. That is, the terminal 20 performing SL transmission connects to a base station 10 of the operator to which it belongs as well as to a base station 10 of the other operator. This allows one operator's terminal 20 to avoid a collision of SL transmission with another operator's terminal 20 based on information learned from each operator's signal.

In the Example 5, "the terminal 20 connects to the base station 10" includes "the terminal 20 receives a signal from the base station 10 without establishing a connection such as an RRC", in addition to establishing a connection by an RRC or the like. In the Example 5, a group of resources (e.g., resource pool, CC, and serving cells) which only the terminal 20 connecting to base stations 10 of a plurality of operators can use may be configured to the terminal 20.

Hereinafter, more specific examples will be described in terms of a connection method with the base stations of the plurality of operators, a scheduling method, a method of receiving scheduling information from the multiple base stations, and transmission control.

### <Example of connection method and transmission control with base stations of multiple operators >

Here, similarly to the case shown in Figs. 22 and 26, it is assumed that there exists operator 1 from which scheduling information for the terminal 20-1 is transmitted and operator 2 from which only resource allocation information to the terminal 20-2 that is another terminal 20 is transmitted. More specifically, the base station 10-1 transmits scheduling information of the operator 1, and the base station 10-2 transmits the scheduling information of the operator 2.

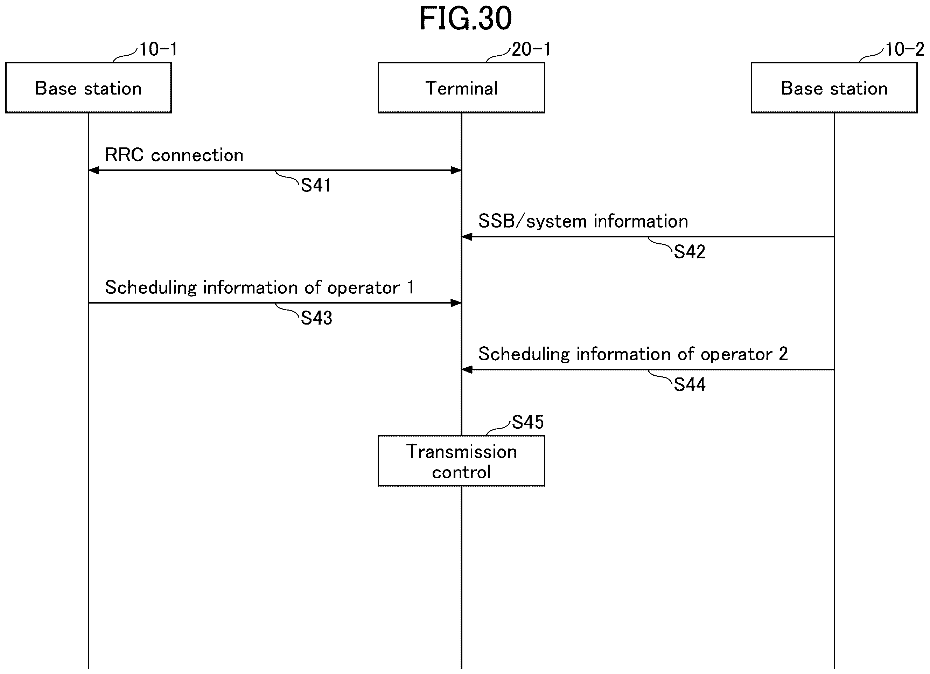

An example of a connection method in this case will be described with reference to Fig. 30. In S41, the terminal 20-1 establishes an RRC connection with the base station 10-1. On the other hand, the RRC connection is not established between the terminal 20-1 and the base station 10-2, and in S42, the terminal 20-1 receives SSB and system information transmitted from the base station 10-2. The SSB or system information may include information of a resource for receiving information (e.g., DCI) transmitted from the base station 10-2 in S44, which will be described later.

In S43, the terminal 20-1 receives information of a resource (scheduling information of the operator 1) pertaining to scheduling to itself from the base station 10-1. In S44, the terminal 20-1 receives resource information (e.g., scheduling information for SL transmission to one or more terminals 20 in the operator 2) pertaining to scheduling for SL transmission at the operator 2 from the base station 10-2.

In S45, the terminal 20-1 performs transmission control. Specifically, the terminal 20-1 may perform a predetermined operation when a part of or all of the resources allocated for SL transmission from the base station 10-1 to itself overlap a part of or all of the resources received in S44 (e.g., SL transmission resources in other operators).

The predetermined operation by the terminal 20-1 is to stop SL transmission using, for example, the resources allocated to it. In this case, the terminal 20-1 may transmit NACK to the base station 10-1.

The predetermined operation by the terminal 20-1 may be to perform SL transmission utilizing the resources allocated to it by increasing the transmission power. The predetermined operation by the terminal 20-1 may be normally executing SL transmission utilizing the resources allocated to it.

As to which operation to perform among transmission stop, transmission power increase, and normal transmission, it may be determined based on at least one of the following: Priority of allocated resources, Order of allocation of resources, and whether the resource can be reserved. As an example, if the type of priority of the allocated resource is high, middle, or low, the transmission power may be increased if the priority is high, the transmission may be normally performed if the priority is middle, and the transmission may be stopped if the priority is low.

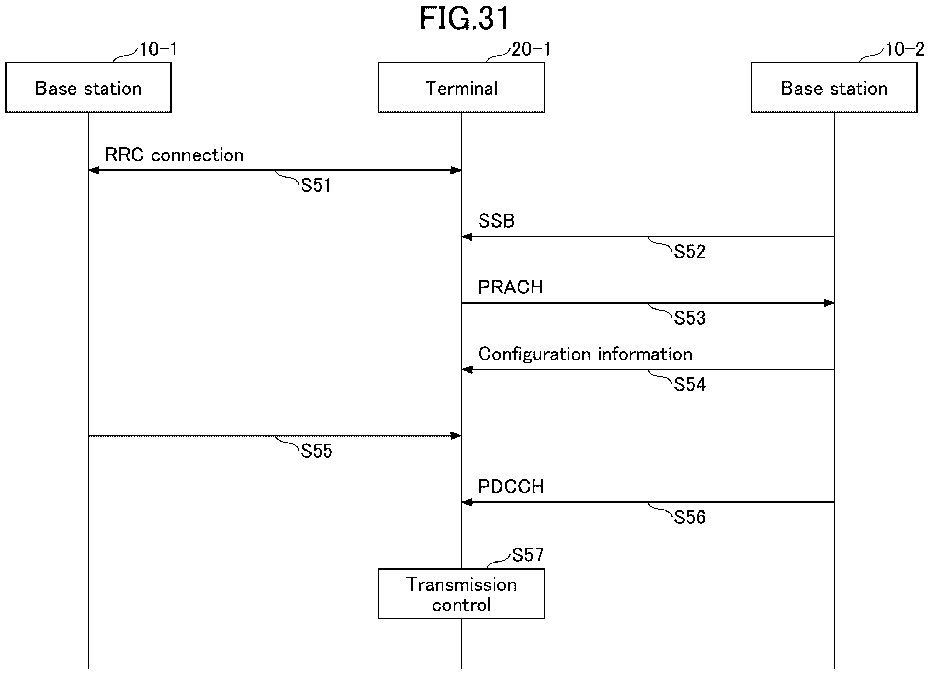

Another example will be described with reference to FIG. 31. In S51, the terminal 20-1 establishes an RRC connection with the base station 10-1 .

Meanwhile, the terminal 20-1 receives SSB from the base station 10-2 at S52 and transmits PRACH at S53. The PRACH resource (e.g., sequence) used for this PRACH transmission may be different from PRACH resource used for PRACH transmission for RRC connection.

After transmitting the PRACH, in S54, the terminal 20-1 receives configuration information from the base station 10-2 concerning reception of PDCCH used by the operator 2 to allocate SL transmission resources. The configuration information may include, for example, one or more or all of the following values for reception of the PDCCH: monitoring occasion, CORESET, search space, aggregation level, RNTI value.

In S55, the terminal 20-1 receives information of a resource pertaining to scheduling to itself (scheduling information of the operator 1) from the base station 10-1. In S56, the terminal 20-1 receives resource information (e.g., scheduling information for SL transmission to one or more terminals 20 in the operator 2) pertaining to scheduling for SL transmission at the operator 2 from the base station 10-2.

In S57, the terminal 20-1 performs transmission control. Here, for example, as described above, the terminal 20-1 may perform a predetermined operation when a part of or all of the resources allocated for SL transmission from the base station 10-1 to itself overlap a part of or all of the resources received at S56 (e.g., SL transmission resources in other operators). Examples of predetermined operations are as described above.

### <Scheduling method>

In the Example 5, scheduling of a resource for SL transmission (SL resource) for the terminal 20 from the base station 10 may be performed by a signal addressed to a single terminal 20 (e.g., UE-specific signal), or may be performed by a signal addressed to multiple terminals 20 (e.g., Group-common signal).

The signal addressed to multiple terminals 20 may include information of a SL resource allocated to each terminal 20. The signal addressed to multiple terminals 20 may include information related to feedback to the base station 10 (e.g., PUCCH slot, PUCCH resource, SAI, DAI, or the like).Also, the signal addressed to multiple terminals 20 may include information of a SL resource allocated to each terminal 20 and information related to feedback to the base station 10.

As described above, in a case where the signal addressed to multiple terminals 20 includes scheduling information (information of a SL resource, or the like) allocated to each terminal 20, the terminal 20 may determine scheduling information addressed to the terminal 20 itself, based on at least one of the following (1) to (3).
(1) Perform determination according to an RNTI used for scrambling CRC of DCI. For example, the terminal 20 determines that the DCI is addressed to the terminal 20 itself in a case where the DCI is decoded by a specific RNTI.
(2) The terminal 20 determines that X-th scheduling information from among N (N>=0) pieces of scheduling information included in a signal addressed to multiple terminals 20, as scheduling information addressed to the terminal 20 itself. Here, X may be indicated to the terminal 20 from the base station 10 via an upper layer parameter of an RRC signal, MAC CE, or the like.
(3) Perform determination according to UE-ID included in a signal addressed to multiple terminals 20. For example, the terminal 20 determines that the scheduling information of the signal is addressed to the terminal 20 itself in a case where UE-ID of the terminal 20 itself is included in the signal addressed to multiple terminals 20.

In the signal addressed to the multiple terminals 20, a predetermined parameter may be common to the multiple terminals 20. Here, the predetermined parameter is, for example, MCS, time-domain resource, or the like.

### <How to receive scheduling information from multiple base stations>

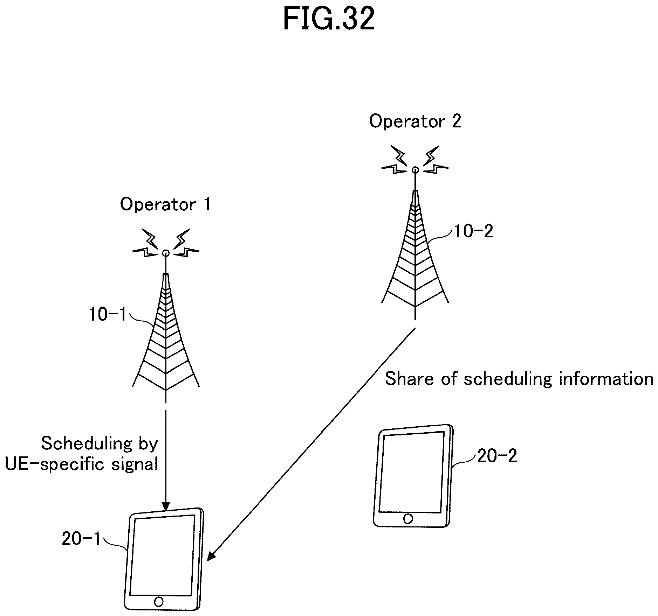

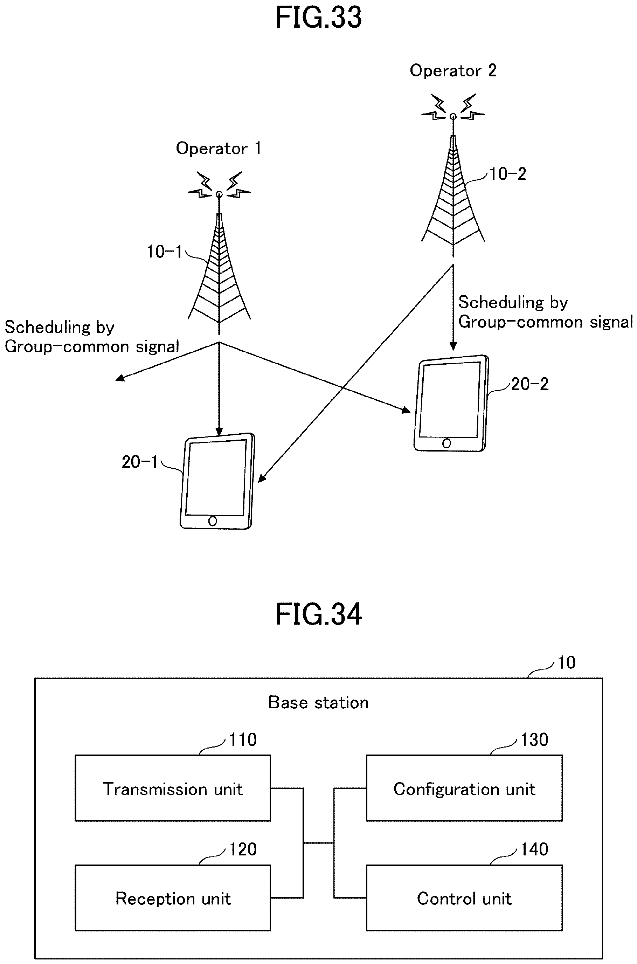

Referring to Figs. 32 and 33, an example where the terminal 20 receives scheduling information from the plurality of base stations 10 will be described. As in the previous example, the base station 10-1 and the terminal 20-1 belong to the operator 1, and the base station 10-2 and the terminal 20-2 belong to the operator 2.

In the example of FIG. 32, the terminal 20-1 receives scheduling information to itself from the base station 10-1 by DCI of UE-specific. The terminal 20-1 receives scheduling information of SL transmission in the operator 2, for example, in the method described in Fig. 30 or Fig. 31.

In the example of FIG. 33, the terminal 20-1 receives scheduling information common to the group from the base station 10-1 by DCI of group common. The terminal 20-1 receives scheduling information of SL transmission in the operator 2, for example, in the method described in Fig. 30 or Fig. 31. Here, an example in which scheduling information to the terminal 20 under the control of the operator 2 is transmitted by the DCI of group common from the base station 10-2 of the operator 2 is shown.

In any example of FIGS. 32 and 33, for example, the terminal 20-1 may perform the predetermined operation described above when a part of or all of the resources allocated for SL transmission from the base station 10-1 to itself overlap a part of or all of SL transmission resources in the operator 2.

The terminal 20 may also receive a plurality of DCIs pertaining to different RNTIs from the base station 10 of each operator. At this time, the terminal 20 may determine that scheduling information other than that addressed to itself is scheduling information to another terminal 20 and that the scheduling information cannot be used. An example will be described where the base station 10-1 and the terminal 20-1 belong to the operator 1 and the base station 10-2 and the terminal 20-2 belong to the operator 2.

For example, in the operator 1, the base station 10-1 transmits a plurality of DCIs in which a plurality of RNTI values are set to be received by a plurality of terminals 20 under the control of the operator 1. For example, the base station 10-1 transmits a DCI, in which RNTI-A is set, that the terminal 20-1 should receive, and a DCI, in which RNTI-B is set, that the terminal 21-1 which is another terminal should receive. Note herein that multiple RNTIs are used, but a single RNTI may be set and scheduling information addressed itself may be identified by using information other than RNTI.

Similarly, in the operator 2, the base station 10-2 transmits a plurality of DCIs, in which a plurality of RNTI values are set, to be received by a plurality of terminals 20 under the control of the operator 2. In this case, the terminal 20-1 of the operator 1 determines that all the DCIs received from the base station 10-2 correspond to scheduling information to the other terminals 20.

### <Example of expected reception>

The terminal 20 may assume that the terminal 20 always receives, from each operator, a signal addressed to multiple terminals 20 at PDCCH monitoring occasion of each operator. For example, in the example of FIG. 33, it may be assumed that the terminal 20-1 always receives group common DCI from each of the base station 10-1 and base station 10-2 as a signal to a plurality of terminals 20 at each operator's PDCCH monitoring occasion.

If the terminal 20 does not receive a signal addressed to the multiple terminals 20 from at least one of the multiple operators from which reception is assumed in the PDCCH monitoring occasion, the terminal 20 may determine not to perform SL transmission at the SL resource corresponding to the occasion. If a SL resource corresponding to the occasion has been allocated, transmission by the SL resource may be stopped. This is because reception quality of a SL signal is assumed to deteriorate in the occasion.

When a predetermined parameter set is notified to a terminal 20 from a base station 10 of an operator, it may mean that no SL resource allocation is performed to the terminal 20. The terminal 20 may also be able to receive SL scheduling to itself from base stations 10 of a plurality of operators. The terminal 20-1 may also report scheduling information received from the base station 10-1 to the base station 10-2.

### <Effect of Example 5>

According to the Example 5, the terminal 20 can perform transmission collision avoidance operation based on the scheduling status of each operator.

### <Other examples>

With respect to any one of the Examples 1 to 5, the Examples 1 to 5 may be performed by replacing the base station 10 with a terminal 20 that is different from a terminal 20 under the control of the base station 10. That is, with respect to any one of the Examples 1 to 4, the technique of the Examples may be applied to an operation in which a terminal 20 configures (or allocates) a transmission resource of another terminal 20 .

With respect to any one of the Examples 1 to 5, the terminal 20 may be any terminal, may be a V2X terminal, or may be a terminal performing D2D other the V2X terminal.

In addition, with respect to any one of the Examples 1 to 5, operations may be performed only in a specific resource pool. For example, with respect to any one of the Examples 1 to 5, operations may be performed only in a resource pool that is available for terminals 20 of Rel-17 or later.

### (Apparatus configuration)

Next, a functional configuration example of the base station 10 and the terminal 20 for performing the processes and operations described above will be described. The base station 10 and the terminal 20 include functions for implementing the Examples 1 to 5 described above. Note that each of the base stations 10 and the terminal 20 may include only functions of one of the Examples 1 to 5.

### <Base station 10>

Fig. 34 is a diagram illustrating an example of a functional configuration of the base station 10. As shown in Fig. 32, the base station 10 includes a transmission unit 110, a reception unit 120, a configuration unit 130, and a control unit 140. The functional structure illustrated in Fig. 34 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20.

The configuration unit 130 stores preset configuration information and various configuration information items to be transmitted to the terminal 20 in a storage apparatus and reads the preset configuration information from the storage apparatus if necessary. The configuration information is read from the configuration unit 130 to be transmitted to the terminal 20 by the transmission unit 110.

The control unit 140 performs, for example, resource allocation and control of the entire base station 10. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

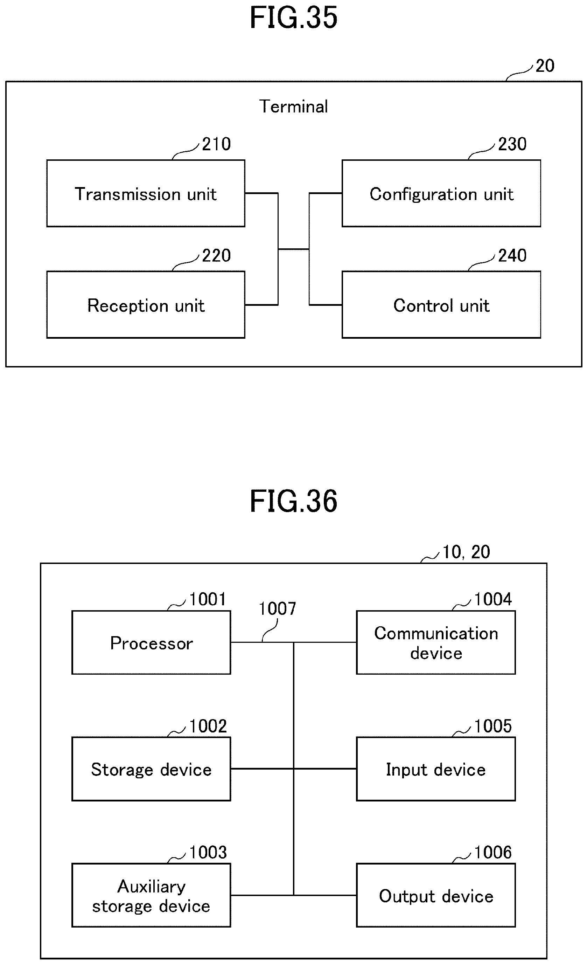

Fig. 35 is a diagram illustrating an example of a functional configuration of the terminal 20. As shown in FIG. 35, the terminal 20 includes a transmission unit 210, a reception unit 220, a configuration unit 230, and a control unit 240. The functional structure illustrated in Fig. 35 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals.

The configuration unit 230 stores, in a storage device, various configuration information items received from the base station 10 via the reception unit 220, and reads them from the storage device if necessary. In addition, the configuration unit 230 stores pre-configured configuration information. The control unit 240 performs control of, for example, determining whether the SL transmission using the allocated resource can be performed.

Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

According to an embodiment of the present invention, for example, at least a terminal, a base station, and a transmission method as described in each of the following items are provided. Hereinafter, the items are described for each related embodiment.

### < Examples 1-3>

### (Item 1)

A terminal including:
a reception unit configured to receive assignment information of a resource of sidelink transmission from a base station of a first operator;
a control unit configured to determine whether to perform sidelink transmission using the resource based on a sidelink signal received from a terminal of a second operator; and
a transmission unit configured to perform sidelink transmission using the resource when it is determined to perform sidelink transmission using the resource.

### (Item 2)

The terminal as described in item 1,
wherein the terminal is assigned a plurality of resources for sidelink transmission, and
wherein the control unit is configured to select a usable resource from the plurality of resources based on the sidelink signal.

### (Item 3)

The terminal as described in item 2,
wherein the control unit is configured to determine a resource for feedback to be transmitted to the base station based on a specific resource in the plurality of resources.

### (Item 4)

The terminal as described in any one of items 1-3,
wherein, when sidelink transmission using a resource assigned from the base station is not performed, the transmission unit is configured to transmit NACK to the base station.

### (Item 5)

The terminal as described in any one of items 1-4,
wherein, in the first operator and the second operator, a part of a resource pool for sidelink reception is a resource pool for sidelink transmission.

### (Item 6)

A transmission method executed by a terminal including:
receiving assignment information of a resource of sidelink transmission from a base station of a first operator;
determining whether to perform sidelink transmission using the resource based on a sidelink signal received from a terminal of a second operator; and
performing sidelink transmission using the resource when it is determined to perform sidelink transmission using the resource.

Any of items 1-6 provides a technique that enables avoidance of sidelink transmission conflicts between different operator terminals. In particular, according to item 2, since a resource can be selected from among multiple resources, flexible control is possible. According to item 3, resources for feedback (e.g. timing) can be defined. According to item 4, the base station can understand the state of the collision. According to item 5, collision can be avoided, for example, by separating the resource pools for sidelink transmission between operators.

### (Example 4)

### (Item 1)

A terminal including:
a reception unit configured to receive assignment information of a resource of sidelink transmission of at least one of a first operator and a second operator from a base station of a first operator;
a control unit configured to determine whether to perform sidelink transmission using a resource assigned from the base station based on the assignment information of the resource; and
a transmission unit configured to perform the sidelink transmission when it is determined to perform the sidelink transmission.

### (Item 2)

The terminal as described in item 1,
wherein the transmission unit is configured to transmit the assignment information of the resource by sidelink.

### (Item 3)

A terminal including:
a reception unit configured to receive assignment information of a resource of sidelink transmission in a first operator;
a control unit configured to determine whether to perform sidelink transmission based on the assignment information of the resource; and
a transmission unit configured to perform the sidelink transmission when it is determined to perform the sidelink transmission.

### (Item 4)

The terminal as described in item 3,
wherein the transmission unit is configured to transmit the assignment information of the resource to a base station of a second operator.

### (Item 5)

A base station including:
a reception unit configured to receive, by uplink, assignment information of a resource for sidelink transmission in a first operator;
a control unit configured to determine a resource for sidelink transmission to be performed by a terminal of a second operator based on the assignment information of the resource; and
a transmission unit configured to transmit assignment information of the resource determined by the control unit to the terminal of the second operator.

### (Item 6)

A transmission method executed by a terminal, including:
receiving assignment information of a resource of sidelink transmission of at least one of a first operator and a second operator from a base station of a first operator;
determining whether to perform sidelink transmission using a resource assigned from the base station based on the assignment information of the resource; and
performing the sidelink transmission when it is determined to perform the sidelink transmission.

Any of items 1-6 provides a technique that enables avoidance of sidelink transmission conflicts between different operator terminals. Especially, according to item 2, the receiver of the sidelink can know the resource allocation information of the other operator. According to item 4, the base station can know the allocation information of the resources of other operators.

### (Example 5)

### (Item 1)

A terminal including:
a reception unit configured to receive first resource assignment information that is assignment information of a resource for sidelink transmission of a first operator from a base station of the first operator, and receive second resource assignment information that is assignment information of a resource for sidelink transmission of a second operator from a base station of the second operator;
a control unit configured to determine whether to perform sidelink transmission using a resource assigned by the first resource assignment information based on the second resource assignment information; and
a transmission unit configured to perform the sidelink transmission when it is determined to perform the sidelink transmission.

### (Item 2)

The terminal as described in item 1,
wherein, after PRACH transmission to a base station of the second operator is performed by the transmission unit, the reception unit is configured to receive configuration information for receiving the second resource assignment information from a base station of the second operator.

### (Item 3)

The terminal as described in item 1 or 2,
wherein the reception unit is configured to receive a signal transmitted by a base station of the first operator to a plurality of terminals, and to obtain the first resource assignment information from the signal.

### (Item 4)

The terminal as described in any one of items 1-3,
wherein the reception unit is configured to assume receiving a signal addressed to a plurality of terminals from base stations of each operator at each PDCCH monitoring occasion,
and wherein, when the reception unit does not receive a signal addressed to a plurality of terminals at a PDCCH monitoring occasion, the transmission unit does not perform sidelink transmission at a resource corresponding to the PDCCH monitoring occasion.

### (Item 5)

A base station including:
a transmission unit configured to transmit, to a terminal, a first resource assignment information that is assignment information of a resource for sidelink transmission in a first operator; and
a reception unit configured to receive NACK from the terminal when the terminal, that receives second resource assignment information that is assignment information of a resource for sidelink transmission in a second operator from a base station of the second operator, determines not to perform sidelink transmission using a resource assigned by the first resource assignment information based on the second resource assignment information.

### (Item 6)

A transmission method executed by a terminal, including:
receiving first resource assignment information that is assignment information of a resource for sidelink transmission of a first operator from a base station of the first operator, and receive second resource assignment information that is assignment information of a resource for sidelink transmission of a second operator from a base station of the second operator;
determining whether to perform sidelink transmission using a resource assigned by the first resource assignment information based on the second resource assignment information; and
performing the sidelink transmission when it is determined to perform the sidelink transmission.

Any of items 1-6 provides a technique that enables avoidance of sidelink transmission conflicts between different operator terminals. In particular, according to the second item, configuration information can be received from the base station of another operator without RRC connection. According to the third item, information addressed to the terminal itself can be obtained from a signal transmitted to a plurality of terminals. According to item 4, for example, SL transmission can be performed in a good radio quality situation.

### (Hardware structure)

In the above functional structure diagrams used for describing an embodiment of the present invention (Fig. 34 and Fig. 35), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming, broadcasting, notifying, communicating, forwarding, configuring, reconfiguring, allocating, mapping, and assigning, etc. For example, a functional block (component) that functions to perform transmission is called a transmitting unit or a transmitter. In either case, as described above, the implementation method is not particularly limited.

For example, the base station 10, terminal 20, etc., according to an embodiment of the present disclosure may function as a computer for processing the radio communication method of the present disclosure. Fig. 36 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 34 may be realized by control programs that are stored in the storage device 1002 and are executed by the processor 1001. Further, for example, the control unit 240 of the terminal 20 illustrated in Fig. 35 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc R O M), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The auxiliary storage device 1003 may be referred to as an auxiliary storage apparatus. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may include a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and the terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be implemented by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUSCH, PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the terminal. For example, each aspect/embodiment of the present disclosure may be applied to a configuration in which communications between the base station and the terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Similarly, the terminal in the present disclosure may be read as the base station. In this case, the function of the terminal described above may be provided by the base station.

The term "determining" used in the present specification may include various actions or operations. The "determining" may include, for example, a case in which "judging", "calculating", "computing", "processing", "deriving", "investigating", "looking up" (looking up, search, inquiry) (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional T T I), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in a RB may be the same, regardless of the numerology, and may be 12, for example. The number of subcarriers included in a RB may be determined on the basis of numerology.

Further, the time domain of a RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a UE, one or more BWPs may be configured in one carrier.

At least one of the configured BWPs may be activated, and the UE may assume that the UE will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may be changed in various ways.

In the present disclosure, in a case where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

It is noted that the SS block or CSI-RS in the present disclosure is an example of a synchronization signal or reference signal.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### [DESCRIPTION OF THE REFERENCE NUMERALS]

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device

## Claims

1. A terminal comprising:
a reception unit configured to receive assignment information of a resource of sidelink transmission from a base station of a first operator;
a control unit configured to determine whether to perform sidelink transmission using the resource based on a sidelink signal received from a terminal of a second operator; and
a transmission unit configured to perform sidelink transmission using the resource when it is determined to perform sidelink transmission using the resource.

2. The terminal as claimed in claim 1,
wherein the terminal is assigned a plurality of resources for sidelink transmission, and
wherein the control unit is configured to select a usable resource from the plurality of resources based on the sidelink signal.

3. The terminal as claimed in claim 2,
wherein the control unit is configured to determine a resource for feedback to be transmitted to the base station based on a specific resource in the plurality of resources.

4. The terminal as claimed in any one of claims 1-3,
wherein, when sidelink transmission using a resource assigned from the base station is not performed, the transmission unit is configured to transmit NACK to the base station.

5. The terminal as claimed in any one of claims 1-4,
wherein, in the first operator and the second operator, a part of a resource pool for sidelink reception is a resource pool for sidelink transmission.

6. A transmission method executed by a terminal comprising:
receiving assignment information of a resource of sidelink transmission from a base station of a first operator;
determining whether to perform sidelink transmission using the resource based on a sidelink signal received from a terminal of a second operator; and
performing sidelink transmission using the resource when it is determined to perform sidelink transmission using the resource.
